(19) **Europäisches Patentamt / European Patent Office / Office européen des brevets**

(11) **EP 3 725 844 A1**

(12) **EUROPEAN PATENT APPLICATION**
published in accordance with Art. 153(4) EPC

(43) Date of publication:
**21.10.2020 Bulletin 2020/43**

(21) Application number: **18889186.5**

(22) Date of filing: **12.12.2018**

(51) Int Cl.:
*C08L 23/16* (2006.01)   *B32B 27/32* (2006.01)
*C08F 210/16* (2006.01)   *C08L 23/06* (2006.01)

(86) International application number:
**PCT/JP2018/045740**

(87) International publication number:
**WO 2019/117209 (20.06.2019 Gazette 2019/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.12.2017 JP 2017237396**

(71) Applicant: **Japan Polyethylene Corporation Tokyo 100-8251 (JP)**

(72) Inventors:
• **MASUMURA Chiaki**
  **Kawasaki-shi, Kanagawa 210-8548 (JP)**
• **UTO Yuichi**
  **Kawasaki-shi, Kanagawa 210-8548 (JP)**
• **SAKAMOTO Shinji**
  **Kawasaki-shi, Kanagawa 210-8548 (JP)**

(74) Representative: **Hoffmann Eitle Patent- und Rechtsanwälte PartmbB Arabellastraße 30 81925 München (DE)**

(54) **POLYETHYLENE RESIN COMPOSITION FOR USE IN LAMINATION, LAMINATE, AND PRODUCTION METHOD FOR LAMINATE**

(57)    The present invention relates to a polyethylene resin composition for lamination having excellent adhesiveness to a substrate or the like, and preferably also excellent in easy-opening properties such as easy piercing properties, and more specifically, relates to a polyethylene resin composition (C) for lamination containing an ethylene/propylene copolymer (A) having the following properties (a-1) to (a-4).
(a-1) A constituent unit derived from ethylene is contained 80 to 98 mol% as a main component, a constituent unit derived from propylene is contained 2 to 20 mol% as an essential sub-component, and a constituent unit derived from a third $\alpha$-olefin other than ethylene and propylene may be contained 5 mol% or less as a sub-component.
(a-2) MFR 0.1 to 100 g/10 min.
(a-3) Density is 0.88 to 0.94 g/cm$^3$.
(a-4) Total of vinyl and vinylidene is 0.35 or more.

[Fig. 1]

**ADHESIVE STRENGTH/PIERCING STRENGTH**

EP 3 725 844 A1

**Description**

Technical Field

The present invention relates to a polyethylene resin composition for lamination, a laminate, and a laminate production method. Specifically, the present invention relates to a polyethylene resin composition for lamination on a substrate such as paper, metal foil, and film, a laminate thereof, and a laminate production method, that have excellent adhesion to a substrate or the like, and preferably also have excellent easy-opening properties such as easy piercing properties.

Background Art

Due to the recent waste disposal problem and the recycling law, packaging and containers used for foods and drinks, seasonings, medicines, and the like are being reduced in volume. On the other hand, paper containers are being studied as a material that is easily burned and as a container that burns less calories at the time of incineration. It is desired that these packages and containers can be easily opened from the viewpoint of convenience during use.

From the viewpoint of imparting necessary properties as a container having heat sealing properties and moisture proof properties, in laminates used for conventional packages and containers, paper, biaxially stretched polyamide, polyester, polypropylene, and the like are used as substrates, and laminates obtained by laminating, on these substrates, a polyethylene-based resin such as a high-pressure low-density polyethylene (LDPE), an ethylene-vinyl acetate copolymer (EVA), or the like as a heat seal layer resin have been used.

However, in recent years, to improve the heat sealing strength, low temperature heat sealing property, hot tack property, impact resistance, pinhole resistance, and the like of these laminates, the use of linear low density polyethylene (LLDPE), particularly LLDPE polymerized with metallocene catalysts, has been proposed. LLDPE is typically a copolymer of ethylene and a C4 or higher $\alpha$-olefin comonomer.

On the other hand, to improve the preservability of contents in packages, containers and the like, laminates are used that are obtained by laminating a film of barrier material, such as a metal foil such as aluminum with barrier properties, a plastic film on which metal or inorganic material, organic material are vapor-deposited, a plastic film with barrier coating, ethylene/vinyl alcohol copolymer, or the like, or a laminated film of these same or different materials, and so on.

Linear low density polyethylene polymerized with metallocene catalyst (metallocene-type polyethylene) can be heat-sealed at low temperature, and has high seal strength and high hot tack strength, and it has been widely used as a sealant for flexible packages and liquid paper containers. However, in applications with punching processes such as paper cups and paper containers, there are problems such as insufficient punchability, no punch-through, and insufficient appearance due to extension of resin layers. In addition, in paper bundling and easy tearing packaging applications, due to insufficient tearability, there are problems such as the necessity of unsealing force and extension of resin layers. Further, a container having a straw hole, such as a liquid paper container, has problems such as insufficient straw penetration.

For producing these laminates, a dry lamination method, co-extrusion molding, or extrusion lamination molding is used. In extrusion lamination molding, an adhesive may or may not be applied, and in each case, a stable and high adhesive strength are required. In particular, when no adhesive is used, adhesion required for the material is more stringent.

Many attempts have been made to solve such problems. For example, laminates of metallocene-type polyethylene and LLDPE polymerized with a Ziegler catalyst have been proposed (for example, refer to Patent Literature 1). However, although the tearability of the laminates is somewhat improved by LLDPE polymerized with the Ziegler catalyst, the extension of the metallocene-type polyethylene layer still cannot be eliminated. Above all, the proposal is not a desirable method because it sacrifices heat sealability significantly, and there is no description on adhesion to a substrate.

Furthermore, an invention is disclosed in which LDPE having a specific swell ratio is blended with metallocene-type polyethylene (for example, refer to Patent Literature 2). However, the heat seal strength and the tear balance are not satisfactory, and there is no description on adhesion to a substrate. In addition, the applicant of the present invention have also disclosed the invention (refer to Patent Literature 3), in which LDPE is blended with an ethylene terpolymer based on ethylene, propylene and 1-hexene or 1-octene. However, there is no description about piercing property and adhesion property, and there is no disclosure that both easy piercing properties and adhesive strength are excellent.

Citation List

Patent Literatures

Patent Literature 1: JP H10-24539 A
Patent Literature 2: JP 2000-212339 A
Patent Literature 3: JP 2006-82547 A

Summary of Invention

Technical Problem

In view of the above problems, an object of the present invention is to provide a laminate having excellent adhesion to a substrate or the like, and preferably also having excellent easy-opening properties such as easy piercing properties.

Solution to Problem

As a result of intensive studies to solve the above problems, a prototype of an ethylene/propylene copolymer having the following properties (a-1) to (a-4) in new areas is made, and by using a polyethylene resin composition for lamination that contains an ethylene propylene copolymer having such specific properties, that is an ethylene/propylene copolymer containing ethylene as a main component and propylene as a sub-component in a predetermined amount, having a certain range of density and melt flow rate (MFR), having a large amount of double bonds contained in the copolymer, and having a large number of branches, the polyethylene resin composition for lamination preferably further containing a specific high-pressure radical polymerization low-density polyethylene, a layer is formed on a substrate layer into a laminate. Thereby, the present inventors have found that the laminate has excellent adhesiveness and preferably further has excellent easy piercing properties, and the laminate achieves both the performances, and is excellent in content protection performance and easy handling, and have accomplished the present invention.

That is, a first aspect of the present invention is a polyethylene resin composition (C) for lamination, which contains an ethylene/propylene copolymer (A) having the following properties (a-1) to (a-4).

(a-1) A constituent unit derived from ethylene is contained 80 to 98 mol% as a main component, a constituent unit derived from propylene is contained 2 to 20 mol% as an essential sub-component, and a constituent unit derived from a third $\alpha$-olefin other than ethylene and propylene may be contained 5 mol% or less as a sub-component (provided, however, that when the constituent unit derived from the third $\alpha$-olefin is contained, the total of the constituent unit derived from ethylene, the constituent unit derived from propylene, and the constituent unit derived from the third $\alpha$-olefin does not exceed 100 mol%).

(a-2) Melt flow rate (190°C, load of 21.18 N) is 0.1 to 100 g/10 min.

(a-3) Density is 0.88 to 0.94 g/cm$^3$.

(a-4) The total of vinyl and vinylidene is 0.35 or more (provided, however, that the number of vinyl and vinylidene is a number per 1000 carbon atoms in total of main chain and side chain measured by NMR).

Further, a second aspect of the present invention is the polyethylene resin composition for lamination according to the first aspect of the present invention, wherein the polyethylene resin composition (C) for lamination contains a high-pressure radical polymerization low-density polyethylene (B) having the following properties (b-1) to (b-2).

(b-1) Melt flow rate (190°C, load of 21.18 N) is 0.1 to 20 g/10 min.

(b-2) Density is 0.915 to 0.930 g/cm$^3$.

Further, a third aspect of the present invention is the polyethylene resin composition for lamination according to the first or second aspect of the present invention, wherein the polyethylene resin composition (C) for lamination contains 95 to 10% by weight of the ethylene/propylene copolymer (A) and 5 to 90% by weight of the high-pressure radical polymerization low-density polyethylene (B).

Further, a fourth aspect of the present invention is the polyethylene resin composition for lamination according to any one of the first to third aspects of the present invention, wherein the ethylene/propylene copolymer (A) further satisfies the following property (a-5).

(a-5) Number of branches (Y) based on comonomer in the ethylene/propylene copolymer and density (X) satisfy Equation 1 (provided, however, that the number of branches is a number per 1000 carbon atoms in total of main chain and side chain measured by NMR.).

$$(Y) \geq -1157 \times (X) + 1080 \quad (Equation\ 1)$$

Further, a fifth aspect of the present invention is the polyethylene resin composition for lamination according to any one of the first to fourth aspects of the present invention, wherein the ethylene/propylene copolymer (A) further satisfies the following property (a-6).
(a-6) Number of branches (Y) based on comonomer in the ethylene/propylene copolymer and density (X) satisfy Equation 2 (provided, however, that the number of branches is a number per 1000 carbon atoms in total of main chain and side chain measured by NMR.).

$$(Y) \geq -1157 \times (X) + 1084 \quad (Equation\ 2)$$

Further, a sixth aspect of the present invention is the polyethylene resin composition for lamination according to any one of the first to fifth aspects of the present invention, wherein the polyethylene resin composition (C) for lamination further satisfies the following properties (C-1) to (C-2).

(C-1) Melt flow rate (190°C, load of 21.18 N) is 1 to 100 g/10 min.
(C-2) Density is 0.88 to 0.94 g/cm$^3$.

Further, a seventh aspect of the present invention is a laminate having a layer containing the polyethylene resin composition (C) for lamination according to any one of the first to sixth aspects of the present invention.
Further, an eighth aspect of the present invention is a laminate having a substrate layer (D) and a layer (E) containing the polyethylene resin composition (C) for lamination according to any one of the first to sixth aspects of the present invention.
Further, a ninth aspect of the present invention is a laminate having at least two layers of a resin layer (E) and a substrate layer (D'),
wherein the resin layer (E) is formed by directly bonding on the substrate layer (D'), and the resin layer (E) and the substrate layer (D') each satisfy the following properties.
Resin layer (E): containing the polyethylene resin composition (C) for lamination according to any one of the first to sixth aspects of the present invention.
Substrate layer (D'): a film in which at least a surface in contact with the resin layer (E) contains a polyamide resin as an essential main component.
Further, a tenth aspect of the present invention is a laminate having at least two layers of a resin layer (E) and a substrate layer (D"),
wherein the resin layer (E) is formed by directly bonding on the substrate layer (D"), and the resin layer (E) and the substrate layer (D") each satisfy the following properties.
Resin layer (E): containing the polyethylene resin composition (C) for lamination according to any one of the first to sixth aspects of the present invention.
Substrate layer (D"): metal foil or metal vapor-deposited film.
Further, an eleventh aspect of the present invention is the laminate according to any one of the seventh to tenth aspects of the present invention, wherein the laminate is formed by an extrusion coating method.
Further, a twelfth aspect of the present invention is a method of producing a laminate, comprising forming a laminate using the polyethylene resin composition (C) for lamination according to any one of the first to sixth aspects of the present invention.
Further, a thirteenth aspect of the present invention is the method of producing a laminate according to the twelfth aspect, wherein the laminate is formed by an extrusion coating method.

Advantageous Effect of Invention

The polyethylene resin composition for lamination and the laminate of the present invention are a polyethylene resin composition for lamination and a laminate which have excellent adhesion to a substrate or the like, and preferably are also excellent in easy-opening properties such as easy tearing property, easy punching property, and easy piercing property, and achieve both the performances, and are excellent in content protection performance and easy handling.

In addition, the method of producing a laminate of the present invention is a method of producing a laminate which has excellent adhesion to a substrate or the like, and preferably is also excellent in easy-opening properties such as easy tearing property, easy punching property, and easy piercing property, and achieves both the performances, and is excellent in content protection performance and easy handling.

BRIEF DESCRIPTION OF DRAWINGS

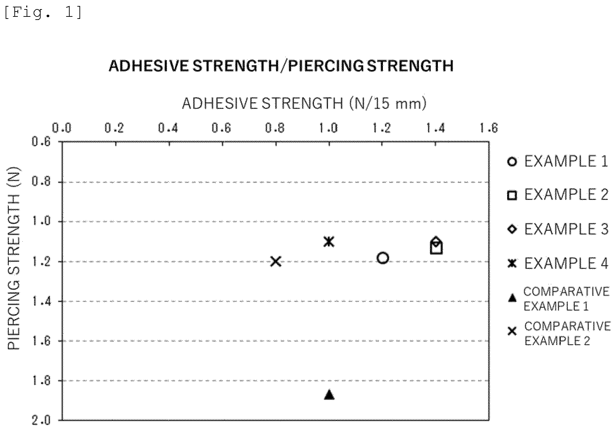

Fig. 1 is a graph indicating the balance between adhesive strength to a substrate and easy piercing properties obtained in examples and comparative examples of the present invention.

DETAILED DESCRIPTION

The present invention is a polyethylene resin composition (C) for lamination that contains a specific ethylene/propylene copolymer (A) and preferably contains a specific high-pressure radical polymerization low-density polyethylene (B), and a laminate having a layer containing the polyethylene resin composition (C) for lamination, and a laminate having at least a substrate layer and a layer (E) containing the polyethylene resin composition (C) for lamination.

Hereinafter, the present invention will be described in detail for each item.

1. Polyethylene resin composition (C) for lamination

(1) Ethylene/propylene copolymer (A)

The ethylene/propylene copolymer (A) used in the present invention has the following properties (a-1) to (a-4) .

(a-1) A constituent unit derived from ethylene is contained 80 to 98 mol% as a main component, a constituent unit derived from propylene is contained 2 to 20 mol% as an essential sub-component, and a constituent unit derived from a third $\alpha$-olefin other than ethylene and propylene may be contained 5 mol% or less as a sub-component (provided, however, that when the constituent unit derived from the third $\alpha$-olefin is contained, the total of the constituent unit derived from ethylene, the constituent unit derived from propylene, and the constituent unit derived from the third $\alpha$-olefin does not exceed 100 mol%).
(a-2) Melt flow rate (190°C, load of 21.18 N) is 0.1 to 100 g/10 min.
(a-3) Density is 0.88 to 0.94 g/cm$^3$.
(a-4) The total of vinyl and vinylidene is 0.35 or more (provided, however, that the number of vinyl and vinylidene is a number per 1000 carbon atoms in total of main chain and side chain measured by NMR).

In addition, as a copolymer having ethylene and propylene as constituent components, a rubber-like polymer, so-called an ethylene propylene rubber (EPM), containing more than 20 mol% of propylene components, having a density of 0.870 g/cm$^3$ or less, and obtained by a solution polymerization method is used in the field of elastomers. The ethylene/propylene copolymer (A) of the present invention is a polymer which is different from these ethylene-propylene rubbers in the density range and the amount of ethylene and propylene contained therein, and has completely different physical properties, and the like.

Further, in the propylene polymer, propylene ethylene copolymer containing a small amount of ethylene component in the production process is also known, but these are also polymers that are significantly different from the ethylene/propylene copolymer (A) of the present invention in their propylene content and the like, and have completely different physical properties and the like.

In addition, since ethylene/$\alpha$-olefin copolymer having a so-called ordinary linear molecular structure (for example, LLDPE) is mainly developed for film applications, usually, a C4 or more $\alpha$-olefin, such as C4 or C6, for obtaining a high-strength copolymer is usually used as a main comonomer component, and a copolymer of ethylene and propylene using a low strength C3 comonomer as a main sub-component and having a density of 0.88 g/cm$^3$ or more has received little attention so far, and has not been commercially available at least from the present applicant.

This time, a new prototype of ethylene/propylene copolymer using C3 comonomer as a main sub-component in such a density range is newly-developed, and after various studies, it has been found that the effects of the present invention can be obtained particularly in a polyethylene resin composition for lamination using the ethylene/propylene copolymer (A) having the physical properties (a-1) to (a-4) in new regions.

(i) Properties of ethylene/propylene copolymer (A)

(a-1) Monomer composition

The ethylene/propylene copolymer (A) used in the present invention is an ethylene/propylene copolymer that contains 80 to 98 mol% of a constituent unit derived from ethylene as a main component and 2 to 20 mol% of a constituent unit derived from propylene as a sub-component, and specific examples of the ethylene/propylene copolymer (A) include a copolymer obtained by polymerization by a catalytic polymerization method, in which the copolymer is formed by randomly polymerizing substantially linearly. A specific example is a random copolymer of ethylene and propylene. Preferably, the constituent unit derived from ethylene is 82 to 97 mol%, the constituent unit derived from propylene is 3 to 18 mol%, more preferably, the constituent unit derived from ethylene is 85 to 95 mol%, and the constituent unit derived from propylene is 5 to 15 mol%. Here, the amount of the monomer such as the ethylene content is a value measured and calculated by $^{13}$C-NMR under the conditions described in the examples described later.

Note that it is preferable that the composition does not contain any other constituent unit derived from other $\alpha$-olefins, particularly $\alpha$-olefins having 4 to 20 carbon atoms, and other monomer components. However, a very small amount of such composition may be substantially contained. In the present specification, an $\alpha$-olefin other than ethylene and propylene is referred to as a third $\alpha$-olefin. The ethylene/propylene copolymer (A) of the present invention may contain, for example, 5 mol% or less, preferably 2 mol% or less, more preferably 1.5 mol% or less, and still preferably 1 mol% or less, and most preferably 0.5 mol% or less of a constituent unit derived from the third $\alpha$-olefin other than ethylene and propylene as a sub-component. Here, when the ethylene/propylene copolymer (A) of the present invention contains the constituent unit derived from the third $\alpha$-olefin, the total of a constituent unit derived from ethylene, a constituent derived from propylene, and a constituent unit derived from the third $\alpha$-olefin does not exceed 100 mol%. Further, in this case, the content of the constituent unit derived from propylene is preferably higher than the content of the constituent unit derived from the third $\alpha$-olefin. Further, when the ethylene/propylene copolymer (A) of the present invention contains a constituent unit derived from the third $\alpha$-olefin, one, two, or more types of the third $\alpha$-olefins can be used.

Further, the ethylene/propylene copolymer (A) may be one type or a combination of two types or more in a range satisfying (a-1) to (a-4), more preferably (a-5) and (a-6).

When propylene is used as an essential comonomer as a sub-component, and in particular, a high-pressure ionic polymerization method using a metallocene catalyst described later is employed, an ethylene/$\alpha$-olefin copolymer having a specifically high total number of vinyl and vinylidene can be obtained. When an $\alpha$-olefin such as 1-hexene or 1-octene is polymerized as a comonomer main component, this effect is hardly obtained.

(a-2) Melt flow rate (MFR: 190°C, load of 21.18 N)

The melt flow rate (MFR: 190°C, load of 21.18 N) of the ethylene/propylene copolymer (A) used in the present invention is 0.1 to 100 g/10 min, preferably 1 to 80 g/10 min, more preferably, 5 to 70 g/10 min. If the MFR is less than 0.1 g/10 min, the spreadability at the time of molding deteriorates and a motor load in an extruder increases, which is not preferable. On the other hand, if the MFR exceeds 100 g/10 min, the state of a molten film at the time of molding becomes unstable, which is not preferable.

In order to adjust the MFR of the ethylene/propylene copolymer, for example, there is a method of appropriately adjusting a polymerization temperature, a comonomer amount, and the like.

Here, the MFR is a value measured in accordance with JIS-K6922-2: 1997 Annex (190°C, load of 21.18 N).

(a-3) Density

The density of the ethylene/propylene copolymer (A) used in the present invention is from 0.88 to 0.94 g/cm$^3$, preferably from 0.885 to 0.94 g/cm$^3$, and more preferably from 0.89 to 0.93 g/cm$^3$. If the density is less than 0.88 g/cm$^3$, blocking becomes insufficient, which is not preferable. On the other hand, if the density exceeds 0.94 g/cm$^3$, the adhesiveness becomes insufficient, which is not preferable.

In order to adjust a polymer density, for example, a method of appropriately adjusting an $\alpha$-olefin content, a polymerization temperature, a catalyst amount, and the like is employed.

Note that, the density of the ethylene/propylene copolymer is measured in accordance with JIS-K6922-2: 1997 Annex (for low density polyethylene) (measuring temperature 23°C) .

(a-4) Total number of vinyl and vinylidene

In a copolymer obtained by copolymerizing ethylene and at least one $\alpha$-olefin, even without positively adding a diene monomer, various double bonds (vinyl, vinylidene, cis-vinylene, trans-vinylene, and tri-substituted olefins) may be generated due to differences in the production process mechanism, and the amount and type thereof are also various.

Conventionally, in order to obtain good crosslinking properties for a solar cell sealing member, it has been known that crosslinking properties are improved when a large number of double bonds is contained in the ethylene/$\alpha$-olefin copolymer. In the field of resin composition for lamination, the differences depending on the amount and type of double bonds have not been examined.

It has been found that, among various double bonds contained in the ethylene/propylene copolymer, vinyl and vinylidene are particularly important in achieving both adhesive strength and easy piercing properties, and found that the effects of the present invention is achieved by producing an ethylene/propylene copolymer with a higher total number of vinyl and vinylidene than copolymers normally obtained and using it as an ethylene/propylene copolymer for resin composition for lamination, and the present invention has been accomplished.

In the ethylene/propylene copolymer (A) used in the present invention, the total number of double bonds of vinyl and vinylidene per 1000 carbon atoms in total of main chain and side chain measured by NMR is 0.35 or more (the unit may be expressed as "pcs/total 1000C"), preferably 0.40 to 5.0 (pcs/total 1000C), more preferably 0.45 to 4.5 (pcs/total 1000C), and still preferably 0.50 to 4.0 (pcs/total 1000C).

If the total number of vinyl and vinylidene is within the above range, the polyethylene resin composition for lamination has excellent adhesive strength. If the total number is less than 0.35, the adhesive strength is not sufficient. The total number of vinyl and vinylidene can be controlled within the above range by selecting an appropriate metallocene catalyst, appropriately adjusting the polymerization temperature, and the type of comonomer.

Note that the number of these double bonds is a number per 1000 carbon atoms in total of the main chain and side chain, is a value calculated using the integrated intensity of the characteristic peak of the $^1$H-NMR spectrum, and is a value measured and calculated under the conditions described in the examples described later.

Further, the number of vinyl and vinylidene can be adjusted according to production conditions such as the type and amount of comonomer and polymerization temperature.

Furthermore, in the present invention, the number of vinyl in the ethylene/propylene copolymer (A) preferably satisfies the range of 0.2 (pcs/total 1000C) or more.

Further, in the present invention, the number of vinylidene in the ethylene/propylene copolymer (A) preferably satisfies the range of 0.12 (pcs/total 1000C) or more.

(a-5) Relationship between the number of branches (Y) based on comonomer and density (X)

The ethylene/propylene copolymer (A) used in the present invention preferably has the number of branches (Y) based on a comonomer and the density (X) satisfying the following (Equation 1).

$$(Y) \geq -1157 \times (X) + 1080 \quad \text{(Equation 1)}$$

When the density and the number of branches satisfy the relationship of the above (Equation 1), the number of branches based on the comonomer is sufficiently ensured, and a polyethylene resin composition for lamination having excellent easy piercing properties and excellent adhesive strength is obtained.

Incidentally, the number of branches (Y) based on the comonomer indicates the amount of tertiary carbon contained in the polymer, and is a value obtained by adding the number of methyl branches and the number of butyl branches per 1000 carbon atoms in total of the main chain and side chain, measured by $^{13}$C-NMR under the conditions described in the examples described below. For example, it can be calculated from the $^{13}$C-NMR spectrum with reference to E. W. Hansen, R. Blom, and O. M. Bade, Polymer, vol. 36, page 4295 (1997).

Further, the density (X) is the density of the ethylene/propylene copolymer (A) and is measured as described above.

The relationship between the density and the number of branches can be adjusted by the type and ratio of the comonomer to be copolymerized.

(a-6) Relationship between the number of branches (Y) based on comonomer and density (X)

The ethylene/propylene copolymer (A) used in the present invention preferably has the number of branches (Y) based on a comonomer and the density (X) satisfying the following (Equation 2).

$$(Y) \geq -1157 \times (X) + 1084 \quad \text{(Equation 2)}$$

Note that the number of branches (Y) based on the comonomer and the density (X) in (Equation 2) are as described in (Equation 1).

When the density and the number of branches satisfy the relationship of the above (Equation 2), the number of branches based on the monomer is sufficiently ensured, and a polyethylene resin composition for lamination having excellent easy piercing properties and excellent adhesive strength is obtained.

The relationship between the density and the number of branches can be adjusted by the type and ratio of the comonomer to be copolymerized.

(ii) Polymerization catalyst and polymerization method of ethylene/propylene copolymer (A)

The catalyst used in the production of the ethylene/propylene copolymer (A) used in the present invention is not particularly limited, but a metallocene catalyst is more preferably used.

Examples of the metallocene catalyst include, but are not particularly limited to, a catalyst having a metallocene compound such as a zirconium compound to which a group having a cyclopentadienyl skeleton is coordinated, and a co-catalyst as catalyst components. In particular, it is preferable to use a metallocene compound such as a zirconium compound to which a group having a cyclopentadienyl skeleton is coordinated.

The production method is not particularly limited, and a high-pressure ion polymerization method, a gas phase method, a solution method, a slurry method, and the like can be used. However, in order to obtain the ethylene/propylene copolymer (A) in which the double bond is adjusted according to the present invention, it is desirable to carry out the polymerization at a high temperature of 150 to 330°C. Therefore, it is preferable to use high pressure ionic polymerization ("Polyethylene Technology Reader", Chapter 4, edited by Kazuo Matsuura and Naotaka Mikami, 2001).

(2) High-pressure radical polymerization low-density polyethylene (B)

The high-pressure radical polymerization low-density polyethylene (B) used for the polyethylene resin composition for lamination of the present invention is a low-density polyethylene (LDPE) obtained by a high-pressure radical polymerization method and having the following properties (b-1) to (b-2), and is preferably a long-chain branched low-density polyethylene.

(b-1) Melt flow rate (190°C, load of 21.18 N) is 0.1 to 20 g/10 min.
(b-2) Density is 0.915 to 0.930 g/cm$^3$.

(i) Properties of high-pressure radical polymerization low-density polyethylene (B)

(b-1) Melt flow rate (MFR: 190°C, load of 21.18 N)

The melt flow rate (MFR) of the high-pressure radical polymerization low-density polyethylene (B) used in the present invention is 0.1 to 20 g/10 min, preferably 0.5 to 15 g/10 min, more preferably 1 to 15 g/10 min. If the MFR is less than 0.1 g/10 min, the spreadability becomes insufficient, and the film breaks during high-speed molding. On the other hand, if the MFR exceeds 20 g/10 min, the molten film becomes unstable.

Here, the MFR is a value measured in accordance with JIS-K6922-2: 1997 Annex (190°C, load of 21.18 N).

(b-2) Density

The density of the high-pressure radical polymerization low-density polyethylene (B) used in the present invention is 0.915 to 0.930 g/cm$^3$, preferably 0.916 to 0.926 g/cm$^3$, and more preferably 0.917 to 0.925 g/cm$^3$. If the density is less than 0.915 g/cm$^3$, stickiness increases. On the other hand, if the density exceeds 0.93 g/cm$^3$, adhesiveness becomes insufficient.

Here, the density is measured in accordance with JIS-K6922-2: 1997 Annex (for low density polyethylene) (measuring temperature 23°C).

(ii) Polymerization method of high-pressure radical polymerization low-density polyethylene (B)

The production of high-pressure radical polymerization method low-density polyethylene (B) used in the present invention is generally carried out by polymerizing ethylene in a tank reactor or tube reactor under the conditions of a polymerization pressure of 1000 to 3000 kg/cm$^2$ and a polymerization temperature of 150 to 300°C in the presence of a radical generator. The melt flow rate can be adjusted by using hydrogen or a hydrocarbon such as methane or ethane as a molecular weight modifier.

(3) Composition ratio of ethylene/propylene copolymer (A) and high-pressure radical polymerization low-density polyethylene (B)

When the polyethylene resin composition (C) for lamination used in the present invention further contains a high-pressure radical polymerization low-density polyethylene (B) in addition to the ethylene/propylene copolymer (A), the ratio of the ethylene/propylene copolymer (A) and the high-pressure radical polymerization low-density polyethylene (B) represents that (A):(B) is 10 to 95% by weight:5 to 90% by weight, preferably 20 to 95% by weight:5 to 80% by weight, and more preferably 30 to 95% by weight:5 to 70% by weight. Still more preferably, it is 40 to 95% by weight:5 to 60% by weight. When the ratio of the ethylene/propylene copolymer (A) is excessively large, the stability of the molten film may decrease. In addition, when the ratio of the high-pressure radical polymerization method low-density polyethylene (B) is large, the adhesive strength may decrease.

In particular, when the ratio (A: B) of the ethylene/propylene copolymer (A) and the high-pressure radical polymerization low-density polyethylene (B) is 50 to 95% by weight: 5 to 50% by weight, the adhesive strength further increases, which is preferable.

(4) Properties of polyethylene resin composition (C) for lamination

(C-1) Melt flow rate (MFR: 190°C, load of 21.18 N)

The melt flow rate (MFR: 190°C, load of 21.18 N) of the polyethylene resin composition (C) for lamination used in the present invention is preferably 1 to 100 g/10 min, more preferably 1 to 80 g/10 min, and still more preferably 2 to 70 g/10 min. If the MFR is less than 1 g/10 min, the spreadability at the time of molding deteriorates, and a motor load in an extruder increases, which is not preferable. On the other hand, if the MFR exceeds 100 g/10 min, the state of a molten film at the time of molding becomes unstable, which is not preferable.

Here, the MFR is a value measured in accordance with JIS-K6922-2: 1997 Annex (190°C, load of 21.18 N).

(C-2) Density

The density of the polyethylene resin composition (C) for lamination used in the present invention is preferably 0.88 to 0.94 $g/cm^3$, more preferably 0.885 to 0.94 $g/cm^3$, and still more preferably 0.89 to 0.935 $g/cm^3$. If the density is less than 0.88 $g/cm^3$, blocking becomes insufficient, which is not preferable. On the other hand, if the density exceeds 0.94 $g/cm^3$, the adhesiveness becomes insufficient, which is not preferable.

Here, the density is measured in accordance with JIS-K6922-2: 1997 Annex (for low density polyethylene) (measuring temperature 23°C).

(5) Other components

For the polyethylene resin composition (C) for lamination used in the present invention or a layer (E) containing it, if necessary, an additive commonly used in a polyethylene-based resin, such as an antioxidant such as phenolic or phosphorus antioxidant, a stabilizer such as a metallic soap, an antiblocking agent, a lubricant, a dispersant, a pigment such as an organic or inorganic colorant, an antifogging agent such as an unsaturated fatty acid ester, an antistatic agent, an ultraviolet absorber, a light stabilizer, and a nucleating agent may be compounded.

In addition, within a range that does not impair the properties of the polyethylene resin composition layer, other thermoplastic resins may be blended, such as polyethylene-based resin such as LDPE, C4-LLDPE, HAO-LLDPE, ethylene-vinyl acetate copolymer (EVA), ethylene-acrylic acid copolymer (EAA), ethylene-methacrylic acid copolymer (EMAA), ethylene-acrylate copolymer (EEA, EMA, EMMA, etc.), and high density polyethylene (HDPE), adhesive resin such as ethylene-maleic anhydride copolymer, polypropylene-based resin, and polystyrene resin.

Further, the polyethylene resin composition (C) for lamination of the present invention preferably does not contain a crosslinking agent.

2. Substrate layer (D)

Examples of the substrate layer (D) used in the present invention include a single-layer film of nylon, polyester, polypropylene, polyethylene, ethylene/vinyl alcohol copolymer, or the like, or a laminated film composed of these same or different materials. The film is preferably a stretched film. Further, a single-layer substrate, such as paper such as kraft paper, metal foil such as aluminum and copper, a plastic film on which a metal or inorganic substance or an organic substance is vapor-deposited, and the like, or a laminated substrate such as a plastic film with a barrier coating, and the like can be used.

The substrate layer may be provided with printing, vapor deposition, and various coatings. The printing on the substrate layer can be partially or entirely performed by a conventional method using a coloring ink. As the ink, a conventionally known ink can be appropriately selected and used. The polyethylene resin composition (C) for lamination of the present invention has excellent adhesion even when formed on the printed surface of the substrate layer (D).

3. First laminate

A first laminate of the present invention is a laminate having a layer containing the above-described polyethylene resin composition (C) for lamination of the present invention, and preferably a laminate having at least a substrate layer (D) and a layer (E) containing the polyethylene resin composition (C) for lamination of the present invention. The layer (E) containing the polyethylene resin composition (C) for lamination of the present invention is formed on at least one surface of the substrate layer (D).
Although there is no restriction on the configuration of the laminate, for example, a laminate including the following configuration is exemplified.
Substrate layer (D)/layer (E) containing polyethylene resin composition (C) for lamination, layer (E) containing polyethylene resin composition (C) for lamination/substrate layer (D)/layer (E) containing polyethylene resin composition (C) for lamination, substrate layer (D)/layer (E) containing polyethylene resin composition (C) for lamination/substrate layer (D), substrate layer (D)/layer (E) containing polyethylene resin composition (C) for lamination/substrate layer (D)/layer (E) containing polyethylene resin composition (C) for lamination, substrate layer (D)/layer (E) containing polyethylene resin composition (C) for lamination/substrate layer (D)/layer (E) containing polyethylene resin composition (C) for lamination/substrate layer (D), substrate layer (D)/layer (E) containing polyethylene resin composition (C) for lamination/other substrate layer, other resin layer/substrate layer (D)/layer (E) containing polyethylene resin composition (C) for lamination, other substrate layer/substrate layer (D)/layer (E) containing a polyethylene resin composition (C) for lamination, substrate layer (D)/layer (E) containing polyethylene resin composition (C) for lamination/other resin layer
Here, the other substrate layer is a substrate layer different from the substrate layer (D), and examples thereof include a plastic film or sheer of a polypropylene-based resin, a polyamide-based resin, a polyester-based resin, a saponified ethylene-vinyl acetate copolymer, polyvinylidene chloride, polycarbonate, or the like, a secondary processed film or sheet of a stretched, printed, or metal vapor-deposited product of the above film or sheet, or the like, a metal foil or plate of aluminum, iron, copper, an alloy containing these as main components, or the like, cellophane, paper, woven fabric, non-woven fabric, and so on.
Further, the other resin layer is a resin layer different from the layer (E) containing the polyethylene resin composition (C) for lamination of the present invention. Examples thereof include other thermoplastic resins, such as polyethylene-based resin such as LDPE, C4-LLDPE, HAO-LLDPE, ethylene-vinyl acetate copolymer (EVA), ethylene-acrylic acid copolymer (EAA), ethylene-methacrylic acid copolymer (EMAA), ethylene-acrylate copolymer (EEA, EMA, EMMA, etc.), high density polyethylene (HDPE), adhesive resin such as ethylene-maleic anhydride copolymer, polypropylene-based resin, and polystyrene resin. It is preferable to use a layer containing the high-pressure radical polymerization low-density polyethylene (B) described above as the other resin layer.
The method of producing the laminate is not particularly limited. For example, a so-called extrusion coating method in which a polyethylene resin composition is melt-extruded and laminated on a substrate layer is preferable. Further, the extrusion coating is preferably laminated one or more times by a method such as single lamination, sandwich lamination, co-extrusion lamination or tandem lamination. The polyethylene resin composition layer can be used as an adhesive layer and also as a surface sealant. According to the first laminate of the present invention, high-speed molding becomes possible because of sufficient adhesion to the substrate.
Further, the method of securing the adhesiveness to the substrate layer is not particularly limited, but, for example, it is preferable to perform a surface treatment on the surface of the substrate and, if necessary, an anchor coat treatment. Examples of the surface treatment method include various treatment methods such as a corona discharge treatment method, an ozone treatment method, a flame treatment method, and a low-temperature plasma treatment method. Further, a method of blowing ozone to a molten resin may be used.
The first laminate of the present invention has a layer (E) containing the above-described polyethylene resin composition (C) for lamination, the laminate is excellent in adhesive strength to a substrate or the like, and preferably also has good easy-opening properties such as easy piercing properties, and is excellent in both content protection performance and easy handling.
Since the first laminate of the present invention has excellent adhesive strength to a substrate or the like, and also has excellent easy-opening properties such as easy piercing properties, it can be particularly suitably used as an easily tearable packaging bag film, a food packaging film, a liquid paper container, a paper bundle, a paper cup, a paper tray, and the like.

4. Second laminate

A second laminate according to the present invention has at least two layers of a resin layer (E) and a substrate layer (D'). The resin layer (E) is formed by directly bonding on the substrate layer (D'), and the resin layer (E) and the substrate layer (D') each satisfy the following properties.

Resin layer (E): containing the polyethylene resin composition (C) for lamination of the present invention described above

Substrate layer (D'): a film in which at least a surface in contact with the resin layer (E) contains a polyamide resin as an essential main component

Conventionally, as a packaging substrate, a polyamide resin, a polyethylene terephthalate resin, a polypropylene resin, or the like having excellent transparency and mechanical strength is used. However, the heat sealing temperature is high, and the packaging speed cannot be increased, the film shrinks during heat sealing to deteriorate the packaging appearance, and the heat sealing strength is low. These substrates are rarely used alone, and a composite film provided with a heat seal layer is usually used. As a heat seal layer, a layer using a polyethylene-based resin composed of a high-pressure low-density polyethylene (LDPE), an ethylene-vinyl acetate copolymer (EVA), a linear low-density polyethylene (LLDPE), or the like is widely used.

As a method of bonding the polyethylene-based resin layer and the substrate, a dry lamination method, an extrusion lamination method, or the like is appropriately selected. In the dry lamination method, a solution prepared by dissolving an isocyanate-based adhesive in an organic solvent is applied on one substrate, and after the solvent is evaporated by a dryer, the other substrate is laminated by a nip roll. Further, in the extrusion lamination method, a method is generally used in which an adhesive such as an isocyanate-based or urethane-based anchor coating agent is applied on a barrier film in advance, and a polyethylene-based resin is melt-extruded on the coated surface. In particular, since a polyamide resin substrate is used for packaging water and heavy goods utilizing pinhole resistance and toughness, an adhesive is generally applied.

When an adhesive is used, the adhesive strength between layers of the laminate is maintained. However, there are problems such as an increase in production cost due to the use of a large amount of an adhesive, a decrease in safety, and environmental problems due to the use of an organic solvent, and odor remaining in the final product. On the other hand, when an adhesive is not used, the adhesive strength between layers of a laminate is weakened, such that a package formed of the laminate is easily broken, and the quality of a packaging material is not stable.

In order to solve these problems, a method using a water-soluble adhesive without using a solvent-based adhesive is proposed. Further, as a method that does not use an adhesive, a method of introducing a polar group such as acid anhydride group or carboxyl group into polyolefin (refer to JP S57-157724 A and JP S59-75915 A), a method of using a polyolefin resin composition containing an epoxy compound (refer to JP 2000-37831 A and JP 2016-22613 A); and a method of using polyethylene showing specific physical properties (refer to JP 2002-19060 A) are proposed.

However, when a water-soluble adhesive is used, an adhesive is generally water-soluble, and thus has insufficient water resistance. In addition, the methods disclosed in JP S57-157724 A, JP-S59-75915 A, and JP 2002-19060 A show improvement in adhesive strength, but it is insufficient when compared with the case where an adhesive is used. Furthermore, even in the methods disclosed in JP 2000-37831 A and JP 2016-22613 A, the adhesiveness with a polyamide resin layer is not considered.

As a result of intensive studies to solve the above problems, the present inventors have found that a laminate in which a resin layer is directly formed on a nylon substrate layer using the above-described polyethylene resin composition for lamination of the present invention has excellent adhesiveness and is a laminate excellent in content protection performance, and have accomplished the second laminate of the present invention.

The second laminate of the present invention shows good adhesion between the polyethylene resin composition and the polyamide resin film, and thereby, a laminate excellent in content protection performance can be provided.

The substrate layer (D') used in the second laminate of the present invention is a film in which at least the surface in contact with the resin layer (E) contains a polyamide resin as an essential main component, and examples include a single-layer film of nylon or a laminated film made of the same or different material as nylon. Preferably, the film is a stretched film. The amount of the polyamide resin contained in the substrate layer (D') is, for example, 50 to 100% by weight. When the substrate layer (D') contains a resin other than the polyamide resin, the resins described later as examples of the other substrate layers can be used.

The substrate layer may be provided with printing, vapor deposition, various coatings, and the like.

The second laminate of the present invention is formed by directly bonding the resin layer (E) containing the polyethylene resin composition (C) for lamination to at least one surface of the substrate layer (D').

Although there is no restriction on the configuration of the laminate, examples of a laminate include the following configurations.

Substrate layer (D')/resin layer (E) containing resin composition (C), resin layer (E) containing resin composition (C)/substrate layer (D')/resin layer (E) containing resin composition (C), substrate layer (D')/resin layer (E) containing resin composition (C)/substrate layer (D'), resin layer (E) containing resin composition (C)/substrate layer (D')/resin layer (E) containing resin composition (C)/substrate layer (D'), substrate layer (D')/resin layer (E) containing resin composition (C)/substrate layer (D')/resin layer (E) containing resin composition (C)/substrate layer (D'), substrate layer (D')/resin layer (E) containing resin composition (C)/other substrate layer, other resin layer/substrate layer (D')/resin layer (E) containing the resin composition (C), other substrate layer/substrate layer (D')/resin layer (E) containing resin composition (C), substrate layer (D')/resin layer (E) containing resin composition (C)/other resin layer

Here, the other substrate layer is a substrate layer different from the substrate layer (D'), and examples thereof include a plastic film or sheet of a polypropylene-based resin, a polyamide-based resin, a polyester-based resin, a saponified ethylene-vinyl acetate copolymer, polyvinylidene chloride, polycarbonate, or the like, a secondary processed film or sheet of a stretched, printed, or metal vapor deposited product of the above film or sheet, or the like, a metal foil or plate of aluminum, iron, copper, an alloy containing these as main components, or the like, cellophane, paper, woven fabric, non-woven fabric, and so on.

Further, the other resin layer is a resin layer different from the resin layer (E). Examples thereof include other thermoplastic resins, such as polyethylene-based resin such as LDPE, C4-LLDPE, HAO-LLDPE, ethylene-vinyl acetate copolymer (EVA), ethylene-acrylic acid copolymer (EAA), ethylene-methacrylic acid copolymer (EMAA), ethylene-acrylate copolymer (EEA, EMA, EMMA, etc.), high density polyethylene (HDPE), adhesive resin such as ethylene-maleic anhydride copolymer, polypropylene-based resin, and polystyrene resin, and the like.

The method of producing the laminate is not particularly limited. For example, a so-called extrusion coating method in which a polyethylene resin composition is melt-extruded and laminated on a substrate layer is preferable. Further, the extrusion coating is preferably laminated one or more times by a method such as single lamination, sandwich lamination, co-extrusion lamination or tandem lamination. The resin layer (E) containing the polyethylene resin composition (C) for lamination can be used as an adhesive layer and also as a surface sealant. According to the second laminate of the present invention, high-speed molding becomes possible because of sufficient adhesion to the substrate.

Further, the method of securing the adhesiveness to the substrate layer is not particularly limited, but for example, a surface treatment of the substrate may be performed. Examples of the surface treatment method include various treatment methods such as a corona discharge treatment method, an ozone treatment method, a flame treatment method, and a low-temperature plasma treatment method. Further, a method of blowing ozone to a molten resin may be used. In addition, when another substrate layer is provided, it is preferable to perform an anchor coat treatment if necessary.

The second laminate of the present invention is formed by the resin layer (E) containing the polyethylene resin composition (C) for lamination described above, and is a laminate having excellent adhesive strength to the substrate layer (D'), and thus, the laminate is excellent in content protection performance.

The second laminate of the present invention has excellent adhesive strength to the substrate layer (D') and can use no adhesive or the like. Therefore, it can be suitably used as a clean packaging film, packaging body, or the like for food, medical care, electronic materials, and the like.

5. Third laminate

A third laminate according to the present invention has at least two layers of the resin layer (E) and a substrate layer (D"), the resin layer (E) is formed by directly bonding on the substrate layer (D"), and the resin layer (E) and the substrate layer (D") each satisfy the following properties.

Resin layer (E): containing the polyethylene resin composition (C) for lamination of the present invention described above
Substrate layer (D"): metal foil or metal vapor-deposited film

Conventionally, in order to improve the preservability of contents such as packaging and containers, a laminate using a metal foil such as an aluminum foil having a barrier property, a metal vapor-deposited film, or the like is used.

In these laminates, a polyethylene resin-based composition composed of a high-pressure method low-density polyethylene (LDPE), an ethylene/vinyl acetate copolymer (EVA), or the like has been used as a heat seal layer. In recent years, to improve the heat sealing strength, low temperature heat sealing property, hot tack property, impact resistance, pinhole resistance, and the like of these laminates, the use of linear low density polyethylene (LLDPE), particularly LLDPE polymerized with metallocene catalysts, has been proposed, and the laminates have been widely used as a sealant for flexible packages and liquid paper containers. However, for easily tearable packaging applications, due to insufficient tearing properties, there are problems such as the necessity of opening force and extension of the resin layer. In addition, a container having a straw hole, such as a liquid paper container, has problems such as insufficient straw penetration.

For producing these laminates, a dry lamination method, co-extrusion molding, or extrusion lamination molding is used. In extrusion lamination molding, an adhesive may or may not be applied, and in each case, a stable and high adhesive strength are required.

When an adhesive is used, the adhesive strength between layers of the laminate is maintained. However, there are problems such as an increase in production cost due to the use of a large amount of an adhesive, a decrease in safety, and environmental problems due to the use of an organic solvent, and odor remaining in the final product. On the other hand, when an adhesive is not used, the adhesive strength between layers of a laminate is weakened, such that a package formed of the laminate is easily broken, and the quality of a packaging material is not stable.

As a resin with excellent adhesion to metal of a metal foil such as aluminum foil, metal vapor-deposited film, or the like, there is an example of using a copolymer of ethylene and methyl acrylate (EMMA), a copolymer of ethylene and acrylic acid (EAA), an ionomer, polymethyl methacrylate (PMMA), or the like. However, containers using these resins not only have the drawback of odor due to decomposition of resin and transfer of eluted components into contents, resulting in deterioration of contents quality, but also have the problem of being expensive.

Many attempts have been made to solve such problems. For example, laminates of metallocene-type polyethylene and LLDPE polymerized with a Ziegler catalyst have been proposed (refer to Patent Literature 1). However, although the tearability of the laminates is somewhat improved by LLDPE polymerized with the Ziegler catalyst, but the extension of the layer of LLDPE polymerized with metallocene catalyst still cannot be eliminated. Above all, the proposal is not a desirable method because it sacrifices heat sealability significantly, and there is no description on adhesion to a substrate. Furthermore, an invention is disclosed in which LDPE having a specific swell ratio is mixed with metallocene-type polyethylene (refer to Patent Literature 2). However, the heat seal strength and the tear balance are not satisfactory, and there is no description on adhesion to a substrate.

Further, as a method that does not use an adhesive, a method using a polyethylene-based resin showing specific physical properties or containing a specific copolymer has been proposed (refer to JP 2001-191452 A), but there is no description regarding the adhesive strength and tearability, and there is no disclosure that both adhesive strength and tearability are excellent.

As a result of intensive studies to solve the above problems, the present inventors have found that a laminate in which a resin layer is directly formed on a metal foil or metal vapor-deposited film substrate layer using the above-described polyethylene resin composition for lamination of the present invention has excellent adhesiveness and excellent easy tearing property, and the laminate achieves both the performances, and is excellent in content protection performance and handleability, and have accomplished the third laminate of the present invention.

The third laminate of the present invention shows good adhesion and easy tearing properties between the polyethylene resin composition and the metal foil or the metal vapor-deposited film, and thereby, a laminate excellent in content protection performance and openability can be provided.

The substrate layer (D") used in the third laminate of the present invention is a metal foil or a metal vapor-deposited film. The metal foil or the metal vapor-deposited film in the present invention is a metal foil such as aluminum, gold, silver, iron, steel, copper, nickel, alloys containing these as main components; or a vapor-deposited film on which a metal such as aluminum, silicon, or the like is vapor-deposited on the surface of a film of polyester, polyamide, or the like.

The third laminate of the present invention is formed by directly bonding the resin layer (E) containing the polyethylene resin composition (C) for lamination to at least one surface of the substrate layer (D").

Although there is no restriction on the configuration of the laminate, examples of a laminate include the following configurations.

Substrate layer (D")/resin layer (E) containing resin composition (C), resin layer (E) containing resin composition (C)/substrate layer (D")/resin layer (E) containing resin composition (C), substrate layer (D")/resin layer (E) containing resin composition (C)/substrate layer (D"), resin layer (E) containing resin composition (C)/substrate layer (D")/resin layer (E) containing resin composition (C)/substrate layer (D"), substrate layer (D")/resin layer (E) containing resin composition (C)/substrate layer (D")/resin layer (E) containing resin composition (C)/substrate layer (D"), substrate layer (D")/resin layer (E) containing resin composition (C)/other substrate layer, other resin layer/substrate layer (D")/resin layer (E) containing resin composition (C), other substrate layer/substrate layer (D")/resin layer (E) containing resin composition (C), substrate layer (D")/resin layer (E) containing resin composition (C)/other resin layer

Here, the other substrate layer is a substrate layer different from the substrate layer (D"), and examples thereof include a plastic film or sheet of a polypropylene-based resin, a polyamide-based resin, a polyester-based resin, a saponified ethylene-vinyl acetate copolymer, polyvinylidene chloride, polycarbonate, or the like, a secondary processed film or sheet of a stretched, printed, or metal vapor-deposited product of the above film or sheet, or the like, a metal foil or plate of aluminum, iron, copper, an alloy containing these as main components, or the like, cellophane, paper, woven fabric, non-woven fabric, and so on.

Further, the other resin layer is a resin layer different from the resin layer (E). Examples thereof include other thermoplastic resins, such as polyethylene-based resin such as LDPE, C4-LLDPE, HAO-LLDPE, ethylene-vinyl acetate copolymer (EVA), ethylene-acrylic acid copolymer (EAA), ethylene-methacrylic acid copolymer (EMAA), ethylene-acrylate copolymer (EEA, EMA, EMMA, etc.), high density polyethylene (HDPE), adhesive resin such as ethylene-maleic anhydride copolymer, polypropylene-based resin, polystyrene resin, and the like.

The method of producing the laminate is not particularly limited. For example, a so-called extrusion coating method in which a polyethylene resin composition is melt-extruded and laminated on a substrate layer is preferable. Further, the extrusion coating is preferably laminated one or more times by a method such as single lamination, sandwich lamination, co-extrusion lamination or tandem lamination. The resin layer (E) containing the polyethylene resin composition (C) for lamination can be used as an adhesive layer and also as a surface sealant. According to the third laminate of the present invention, high-speed molding becomes possible because of sufficient adhesion to the substrate.

Further, the method of securing the adhesiveness to the substrate layer is not particularly limited, but for example, a surface treatment of the substrate may be performed. Examples of the surface treatment method include various treatment methods such as a corona discharge treatment method, an ozone treatment method, a flame treatment method, and a low-temperature plasma treatment method. Further, a method of blowing ozone to a molten resin may also be used. In addition, when another substrate layer is provided, it is preferable to perform an anchor coat treatment if necessary.

The third laminate of the present invention is formed by the resin layer (E) containing the polyethylene resin composition (C) for lamination described above, and is a laminate having excellent adhesive strength to the substrate layer (D") and good easy tearing properties, and thus, the laminate is excellent in content protection performance and handleability.

The third laminate of the present invention has good adhesive strength to the substrate layer (D") and good easy tearing properties. Therefore, it can be suitably used as an easily tearable packaging bag film, a food packaging film, a liquid paper container, a packaging container for yokan, frozen desserts such as jelly, dried foods, oils and fats, confectionery, and the like. Examples

Hereinafter, the present invention will be described specifically with reference to examples, but the present invention is not limited thereto. Note that the measuring methods and resins used in the examples and comparative examples are as follows.

<First laminate>

1. Method of evaluating resin properties

    (1) Melt flow rate (MFR): MFRs of ethylene/propylene copolymer or other ethylene/$\alpha$-olefin copolymers, high-pressure radical polymerization low-density polyethylene, a polyethylene resin composition were measured in accordance with JIS-K6922-2: 1997 Annex (190°C, load of 21.18 N).

    (2) Density: densities of ethylene/propylene copolymer or other ethylene/$\alpha$-olefin copolymers, high-pressure radical polymerization low-density polyethylene, a polyethylene resin composition were measured in accordance with JIS-K6922-2: 1997 Annex (23°C, low density polyethylene).

    (3) Amount of monomer, number of branches, number of double bonds:

<Sample preparation and measurement conditions>

200 mg of a sample was charged into an NMR sample tube having an inner diameter of 10 mm$\varphi$ together with 2.4 ml of o-dichlorobenzene/deuterated bromobenzene=4/1 (volume ratio) and hexamethyldisiloxane which is a standard substance for chemical shift, and dissolved.

The NMR measurement was performed using a Bruker Biospin AV400M NMR apparatus equipped with a 10 mm$\varphi$ cryoprobe.

The $^{13}$C-NMR measurement conditions were as follows: the sample temperature was 120°C, the pulse angle was 90°, the pulse interval was 20 seconds, and the number of integration was 128 times, and the measurement was performed by a broadband decoupling method.

The measurement conditions of $^1$H-NMR were as follows: the sample temperature was 120°C, the pulse angle was 4.5°, the pulse interval was 2 seconds, and the number of integration was 512 times.

<Calculation method>

(i) Amount of monomer, number of branches based on comonomer

Using the signal intensity of the $^{13}$C-NMR spectrum, the amounts of propylene, hexene, and ethylene were determined from the following equations:

$$C3(mol\%) = I(P) \times 100 / [I(P) + I(H) + I(E)]$$

$$C6(mol\%) = I(H) \times 100 / [I(P) + I(H) + I(E)]$$

$$C2(mol\%) = I(E) \times 100 / [I(P) + I(H) + I(E)]$$

Here, I(P), I(H), and I(H) are the amounts represented by the following equations, respectively.

$$I(P) = 0.5 \times (I_{37.69-37.20} + I_{37.90-37.69} + I_{37.97-37.90} + I_{43.90-42.68}) + I_{46.60-45.39}$$

$$I(H) = 0.5 \times (I_{34.56-34.22} + I_{34.94-34.86} + I_{43.60-42.68}) + 0.5 \times (I_{34.86-34.70} - I_{35.80-35.68}) + I_{40.10-39.96} + I_{40.80-40.70}$$

$$I(E) = \{0.5 \times (I_{34.94-34.86} + I_{37.90-37.69} I_{37.97-37.90} + I_{34.56-34.22} + I_{37.69-37.20}) + 0.5 \times (I_{34.86-34.70} - I_{35.80-35.68}) + I_{24.90-24.70} + I_{24.70-24.52} + I_{24.52-24.32} + I_{27.28-26.83} + I_{27.50-27.28} + I_{31.50-28.50} - I(H)\} / 2$$

I indicates the integrated intensity, and the subscript number of I indicates the range of the chemical shift. For example, $I_{37.59-37.20}$ indicates the integrated intensity of the 13C signal detected between 37.69 ppm and 37.20 ppm.

For the chemical shift, the 13C signal of hexamethyldisiloxane was set at 1.98 ppm, and the chemical shifts of the other 13C signals were based on this.

Further, the number of branches per 1000 carbon atoms in total of main chain and side chain was determined by the following equations:

$$\text{Number of methyl branches (pcs/total 1000C)} = C3(mol\%) \times 1000 / \{C3(mol\%) \times 3 + C6(mol\%) \times 6 + C2(mol\%) \times 2\}$$

$$\text{Number of butyl branches (pcs/total 1000C)} = C6(mol\%) \times 1000 / \{C3(mol\%) \times 3 + C6(mol\%) \times 6 + C2(mol\%) \times 2\}$$

(ii) Number of double bonds

The amount of unsaturated bonds per 1000 carbon atoms in total of main chain and side chain was determined from the following equation using the signal intensity of the $^1$H-NMR spectrum.

$$\text{Number of vinylidene (pcs/total 1000C)} = I_{vd} \times 1000 / I_{total}$$

$$\text{Number of vinyl (pcs/total 1000C)} = I_{vi} \times 1000 / I_{total}$$

$$\text{Number of tri-substituted olefins (pcs/total}$$

$$1000C)=I \; tri \times 1000/I \; total$$

$$\text{Number of vinylene (pcs/total 1000C)}=I \; vnl \times 1000/I$$

$$total$$

I indicates the integrated intensity, and the subscript number of I indicates the range of the chemical shift.

Here, I vd, I vi, I tri, I vnl, and I total are the amounts represented by the following equations, respectively.

$$Ivd=(I_{4.88-4.44})/2$$

$$Ivni=(I_{5.52-5.30})/2$$

$$Ivi=(I_{5.05-4.88}+I_{5.85-5.70})/3$$

$$Itri=I_{5.30-5.05}$$

$$Itotal=(I_{0.00-5.85})/2$$

For example, $I_{5.52-5.30}$ indicate the integrated intensity of the proton signal detected between 5.52 ppm and 5.30 ppm.

For the chemical shift, the proton signal of hexamethyldisiloxane was set at 0.09 ppm, and the chemical shifts of signals due to other protons were based on this.

(4) Molten film stability:

(4-1) Examples 1 to 4 and Comparative Examples 1 to 2

The stability of the molten film was visually observed at an extruder of 90 mmφ, T dies of 560 mm in width, a lip width of 0.8 mm, an air gap of 120 mm, a molding temperature of 320°C, and a take-off speed of 150 m/min. The case where the molten film could be processed stably was evaluated as "○", and the case where the molten film was unstable and could not be processed to a uniform thickness was evaluated as "×".

(4-2) Examples 5 to 7 and Comparative Examples 3 to 5

The stability of the molten film was visually observed at an extruder of 40 mmφ, T dies of 380 mm in width, a lip width of 0.8 mm, an air gap of 110 mm, a molding temperature of 320°C, and a take-off speed of 30 m/min. The case where the molten film could be processed stably was evaluated as "○", and the case where the molten film was unstable and could not be processed to a uniform thickness was evaluated as "×".

(5) Adhesive strength (N/15 mm): Examples 1 to 4 and Comparative Examples 1 to 2 (aluminum substrate)

With a laminator of a 90 φ extruder, 50 g/m² of a kraft was fed from a feeding machine as a substrate, while applying a corona treatment of 30 W·min/m² to a kraft surface, an aluminum substrate of 7 μm was fed from the sandwich side, the polyethylene resin composition (C) was subjected to extrusion sandwich lamination under the conditions of a take-off speed of 150 m/min and a thickness of 25 μm. A laminate of the kraft, the polyethylene resin composition (C) layer, the aluminum substrate layer of 7 μm, and an LC600A layer was obtained by performing an anchor coat treatment on the opposite side to the polyethylene resin composition (C) layer side of the aluminum substrate and performing extrusion lamination processing of Novatec LC600A made by Japan Polyethylene Corporation at a take-off speed of 100 m/min and a thickness of 30 μm. As the anchor coating agent, a mixture of Olivine EL420 made by Toyo Morton Co., Ltd. and methanol at a ratio of 1:9 was used.

The adhesive strength between the aluminum substrate and the polyethylene resin composition (C) of the obtained laminate was evaluated. Evaluation conditions were T-shaped peeling, and the peeling speed was 50 mm/min.

(6) Piercing strength (N) and piercing breaking elongation (mm): Examples 1 to 4 and Comparative Examples 1 to 2

With a laminator of a 90 φ extruder, PET of 25 μm was used as a substrate, the polyethylene resin composition (C) was subjected to extrusion lamination at a take-off speed of 150 m/min, and a thickness of 25 μm to obtain a laminate having a PET substrate layer of 25 μm and a polyethylene resin composition (C) layer. The polyethylene resin composition (C) layer was peeled off from the obtained laminate, and piercing strength was evaluated. The evaluation conditions were as follows: a film was fixed in an area of 25 mmφ, a semicircular needle having a diameter of 1.0 mm and a tip radius of 0.5 mm was pierced at a speed of 1000 mm per minute, and the maximum stress until the needle penetrated was evaluated. Further, elongation from the occurrence of stress until the needle penetrated was evaluated.

(7) Adhesive strength (N/15 mm): Examples 5 to 7 and Comparative Examples 3 to 5 (nylon substrate)

With a laminator of a 40 φ extruder, from a feeding machine, a 15 μm biaxially stretched nylon previously subjected to white solid printing was used as a feeding substrate, and co-extrusion lamination was performed under the conditions of a take-off speed of 30 m/min, and each thickness of 15 μm so as to form the polyethylene resin composition (C) layer on the printed surface and the outermost low density polyethylene (B) layer in contact with the polyethylene resin composition (C) layer, to obtain a laminate of biaxially stretched nylon, white solid printing, the polyethylene resin composition (C) layer, and the low density polyethylene (B) layer.

The adhesive strength between the white solid printed surface and the polyethylene resin composition (C) layer of the obtained laminate was evaluated. Evaluation conditions were T-shaped peeling, and the peeling speed was 300 mm/min.

(8) Tear strength, tearability: Examples 5 to 7 and Comparative Examples 3 to 5

The trouser tear strength of the laminate obtained in the above (7) was determined in accordance with JIS-K7128-1. Measurement was performed in the taking-over direction and the right-angled direction (TD direction) of the film at a take-off speed of 200 mm/min. The case where the sample did not elongate at the time of sample tearing and was cut in the tearing direction was evaluated as "○", and the case where the sample was elongated and cut away from the tearing direction was evaluated as "×".

2. Resin material

(1) Ethylene/propylene copolymer (A) or other ethylene/α-olefin copolymers

(PE-1) to (PE-3) and (PE-6) to (PE-10) obtained by the following production method were used as the ethylene/propylene copolymer of the component (A) or other ethylene/α-olefin copolymers. The physical properties are indicated in Tables 1-2.

Production method of (PE-1) to (PE-3) and (PE-6) to (PE-10)

(i) Preparation of catalyst

To 0.05 mol of complex "rac-dimethyl silylene bis indenyl hafnium dimethyl" prepared by the method described in JP H10-218921 A, an equimolar amount of "N, N-dimethyl anilinium tetrakis (pentafluorophenyl) borate" was added, and diluted to 50 liters with toluene to prepare a catalyst solution.

(ii) Polymerization method

A stirring type, autoclave type continuous reactor with an internal volume of 5.0 liters was used, and the pressure in the reactor was maintained at 80 MPa. While appropriately adjusting ethylene, propylene, and 1-hexene, a raw material gas was continuously supplied at a rate of 40 kg/hour. In addition, the catalyst solution described in the section "(i) Preparation of catalyst" was continuously supplied, and the polymerization temperature was appropriately adjusted within the range of 150 to 250°C to obtain an ethylene/α-olefin copolymer.

The physical properties of the obtained ethylene/propylene copolymer or other ethylene/α-olefin copolymers are shown in Tables 1 and 2.

(2) High-pressure radical polymerization low-density polyethylene

High-pressure radical polymerization low-density polyethylenes (PE-4) to (PE-5) having the physical properties shown in Tables 1 and 2 were used.

(3) Ethylene/methyl acrylate copolymer

An ethylene/methyl acrylate copolymer (MA 12% by weight) (PE-11) having the physical properties shown in Table 2 was used.

(Example 1)

A polyethylene resin composition (C) composed of 70% by weight of (PE-1) as an ethylene/propylene copolymer (A) and 30% by weight of high-pressure radical polymerization method long-chain branched low-density polyethylene (PE-4) in which MFR was 7 g/10 min and the density was 0.918 g/cm$^3$ as a high-pressure low-density polyethylene (B) were granulated with a 40 mm single screw extruder to obtain pellets of a polyethylene-based composition.

Using the obtained pellets, and using a specific substrate and extrusion lamination method for evaluating the above (4-1) molten film stability, (5) adhesive strength, (6) piercing property, a laminate was obtained, and each evaluation was performed. Table 1 shows the evaluation results of the laminate.

(Example 2)

Pellets were prepared and evaluations were performed in the same manner as in Example 1 except that (PE-2) was used instead of (PE-1) as the ethylene/propylene copolymer (A) in Example 1. Table 1 shows the evaluation results.

(Example 3)

Pellets were prepared and evaluations were performed in the same manner as in Example 1 except that (PE-6) was used instead of (PE-1) as the ethylene/propylene copolymer (A) in Example 1. Table 1 shows the evaluation results.

(Example 4)

Pellets were prepared and evaluations were performed in the same manner as in Example 1 except that (PE-7) was used instead of (PE-1) as an ethylene/propylene copolymer (A) in Example 1. Table 1 shows the evaluation results.

(Comparative Example 1)

Pellets were prepared and evaluations were performed in the same manner as in Example 1 except that an ethylene/α-olefin copolymer (PE-3) which was a copolymer of ethylene and 1-hexene was used instead of (PE-1) which was an ethylene/propylene copolymer used in Example 1. Table 1 shows the evaluation results.

(Comparative Example 2)

Pellets were prepared and evaluations were performed in the same manner as in Example 1 except that a composition obtained by only (PE-5) which was a high-pressure radical polymerization low-density polyethylene (B) was used without using an ethylene/propylene copolymer (A) in Example 1. Table 1 shows the evaluation results.

[Table 1]

| | ITEMS | UNIT | EXAMPLE 1 | EXAMPLE 2 | EXAMPLE 3 | EXAMPLE 4 | COMPARATIVE EXAMPLE 1 | COMPARATIVE EXAMPLE 2 |
|---|---|---|---|---|---|---|---|---|
| ETHYLENE/PROPYLENE COPOLYMER (A) OR OTHER ETHYLENE/$\alpha$-OLEFIN COPOLYMERS | TYPE | - | PE-1 | PE-2 | PE-6 | PE-7 | PE-3 | - |
| | BLENDING RATIO | % BY WEIGHT | 70 | 70 | 70 | 70 | 70 | - |
| | MFR | g/10 min | 11 | 12 | 18 | 14 | 12 | - |
| | DENSITY (X) | g/cm3 | 0.911 | 0.914 | 0.906 | 0.904 | 0.911 | - |
| LOW-DENSITY POLYETHYLENE (B) | TYPE | - | PE-4 | PE-4 | PE-4 | PE-4 | PE-4 | PE-5 |
| | BLENDING RATIO | % BY WEIGHT | 30 | 30 | 30 | 30 | 30 | 100 |
| | MFR | g/10 min | 7 | 7 | 7 | 7 | 7 | 8 |
| | DENSITY | g/cm3 | 0.918 | 0.918 | 0.918 | 0.918 | 0.918 | 0.919 |
| RESIN COMPOSITION (C) | MFR | g/10 min | 10 | 10 | 14 | 11 | 10 | 8 |
| | DENSITY | g/cm3 | 0.913 | 0.915 | 0.910 | 0.908 | 0.913 | 0.919 |

EP 3 725 844 A1

(continued)

| | ITEMS | UNIT | EXAMPLE 1 | EXAMPLE 2 | EXAMPLE 3 | EXAMPLE 4 | COMPARATIVE EXAMPLE 1 | COMPARATIVE EXAMPLE 2 |
|---|---|---|---|---|---|---|---|---|
| COMPOSITION AND PHYSICAL PROPERTIES OF ETHYLENE/PROPYLENE COPOLYMER (A) OR OTHER ETHYLENE/α-OLEFIN COPOLYMERS | C2 CONTENT | mol% | 92.3 | 93.0 | 90.6 | 90.0 | 95.1 | - |
| | C3 CONTENT | mol% | 7.5 | 7.0 | 9.2 | 9.9 | 0.0 | - |
| | C6 CONTENT | mol% | 0.2 | 0.0 | 0.2 | 0.1 | 4.9 | - |
| | NUMBER OF BRANCHES (Y) BASED ON COMONOMER | PCS/1000C | 37 | 34 | 45 | 47 | 23 | - |
| | CALCULATED VALUE ON RIGHT SIDE OF EQUATION (1) | PCS/1000C | 26 | 23 | 32 | 34 | 26 | - |
| | SUFFICIENCY OF EQUATION (1) | | ○ | ○ | ○ | ○ | × | - |
| | CALCULATED VALUE ON RIGHT SIDE OF EQUATION (2) | PCS/1000C | 30 | 27 | 36 | 38 | 30 | - |
| | SUFFICIENCY OF EQUATION (2) | | ○ | ○ | ○ | ○ | × | - |
| | VINYL | PCS/1000C | 0.33 | 0.39 | 0.34 | 0.31 | 0.19 | - |
| | VINYLIDENE | PCS/1000C | 0.28 | 0.35 | 0.32 | 0.30 | 0.11 | - |
| | VINYLENE | PCS/1000C | 0.18 | 0.28 | 0.16 | 0.15 | 0.24 | - |
| | TRI-SUBSTITUTED OLEFIN | PCS/1000C | 0.12 | 0.15 | 0.12 | 0.11 | 0.23 | - |
| | VINYL+VINYLIDENE | PCS/1000C | 0.61 | 0.74 | 0.66 | 0.61 | 0.31 | - |
| | TOTAL DOUBLE BONDS | PCS/1000C | 0.91 | 1.17 | 0.94 | 0.87 | 0.78 | - |
| PROCESSABILITY | STABILITY OF MOLTEN FILM | | ○ | ○ | ○ | ○ | ○ | ○ |

(continued)

| | ITEMS | UNIT | EXAMPLE 1 | EXAMPLE 2 | EXAMPLE 3 | EXAMPLE 4 | COMPARATIVE EXAMPLE 1 | COMPARATIVE EXAMPLE 2 |
|---|---|---|---|---|---|---|---|---|
| QUALITY | ADHESIVE STRENGTH | N/15 mm | 1.2 | 1.4 | 1.4 | 1.0 | 1.0 | 0.8 |
| | PIERCING STRENGTH | N | 1.2 | 1.1 | 1.1 | 1.1 | 1.9 | 1.2 |
| | PIERCING BREAKING ELONGATION | mm | 8 | 7 | 9 | 9 | 11 | 8 |
| $(Y) \geq -1157*(X)+1080$ (EQUATION 1) (Y): NUMBER OF BRANCHES BASED ON COMONOMER, (X): DENSITY $(Y) \geq -1157*(X)+1084$ (EQUATION 2) (Y): NUMBER OF BRANCHES BASED ON COMONOMER, (X): DENSITY | | | | | | | | |

In order to show the relationship between the adhesive properties and the piercing properties of Examples 1 to 4 and Comparative Examples 1 to 2 obtained from Table 1, the results of both are shown as a graph in Fig. 1.

In the graph, the X-axis (horizontal axis) indicates the adhesive strength, the adhesive strength is preferably a high value, and the Y-axis (vertical axis) indicates the piercing strength. Since the piercing strength is preferably a small value, the lower side is plotted as a large value and the upper side is plotted as a small value. As a whole, the upper right side in this graph is shown as a preferable range.

As is clear from the results of Table 1 and Fig. 1, the polyethylene resin composition for lamination according to the examples of the present invention and the laminate obtained therefrom are excellent in molten film stability, have excellent adhesive strength, and also have excellent easy piercing properties, and therefore, a laminate having excellent balance between the adhesive strength to a substrate and the easy piercing property can be obtained.

On the other hand, when an ethylene-hexene copolymer having a small amount of double bonds was used (Comparative Example 1), the adhesive strength was reduced and the piercing property was not good.

Further, when only the high-pressure radical polymerization method low-density polyethylene (B) was used without using the ethylene/propylene copolymer (A) (Comparative Example 2), good adhesive strength could not be obtained.

(Example 5)

A polyethylene resin composition (C) composed of (PE-1) as an ethylene/propylene copolymer (A) was granulated by a 40 mm single screw extruder to obtain pellets of a polyethylene-based composition.

Using the pellets obtained above and using a specific substrate and extrusion lamination method for evaluating the above (4-2) molten film stability, (7) adhesive strength, (8) tear strength and tearability, a laminate was obtained, and each evaluation was performed. Table 2 shows the evaluation results of the laminate.

(Example 6)

Pellets were prepared and evaluations were performed in the same manner as in Example 5 except that (PE-8) was used instead of (PE-1) as an ethylene/propylene copolymer (A) in Example 5. Table 2 shows the evaluation results.

(Example 7)

Pellets were prepared and evaluations were performed in the same manner as in Example 5 except that (PE-9) was used instead of (PE-1) as an ethylene/propylene copolymer (A) in Example 5. Table 2 shows the evaluation results.

(Comparative Example 3)

Pellets were prepared and evaluations were performed in the same manner as in Example 5 except that (PE-4) which was an high-pressure radical polymerization low-density polyethylene (B) was used instead of (PE-1) which was an ethylene/propylene copolymer (A) in Example 5. Table 2 shows the evaluation results.

(Comparative Example 4)

Pellets were prepared and evaluations were performed in the same manner as in Example 5 except that an ethylene/$\alpha$-olefin copolymer (PE-10) which was a copolymer of ethylene and 1-hexene was used instead of (PE-1) as an ethylene/propylene copolymer (A) in Example 5. Table 2 shows the evaluation results.

(Comparative Example 5)

Pellets were prepared and evaluations were performed in the same manner as in Example 5 except that (PE-11) which was an ethylene/methyl acylate copolymer was used instead of (PE-1) which was an ethylene/propylene copolymer (A) in Example 5. Table 2 shows the evaluation results.

[Table 2]

| | ITEMS | UNIT | EXAMPLE 5 | EXAMPLE 6 | EXAMPLE 7 | COMPARATIVE EXAMPLE 3 | COMPARATIVE EXAMPLE 4 | COMPARATIVE EXAMPLE 5 |
|---|---|---|---|---|---|---|---|---|
| ETHYLENE/PROPYLENE COPOLYMER (A) OR OTHER ETHYLENE/$\alpha$-OLEFIN COPOLYMERS OR POLYETHYLENE | TYPE | - | PE-1 | PE-8 | PE-9 | PE-4 | PE-10 | PE-11 |
| | MFR | g/10 min | 11 | 48 | 8 | 7 | 12 | 10 |
| | DENSITY (X) | g/cm3 | 0.911 | 0.894 | 0.886 | 0.918 | 0.907 | 0.933 |
| LOW-DENSITY POLYETHYLENE (B) | TYPE | - | PE-4 | PE-4 | PE-4 | PE-4 | PE-4 | PE-4 |
| | MFR | g/10 min | 7 | 7 | 7 | 7 | 7 | 7 |
| | DENSITY | g/cm3 | 0.918 | 0.918 | 0.918 | 0.918 | 0.918 | 0.918 |

| | ITEMS | UNIT | EXAMPLE 5 | EXAMPLE 6 | EXAMPLE 7 | COMPARATIVE EXAMPLE 3 | COMPARATIVE EXAMPLE 4 | COMPARATIVE EXAMPLE 5 |
|---|---|---|---|---|---|---|---|---|
| COMPOSITION AND PHYSICAL PROPERTIES OF ETHYLENE/ PROPYLENE COPOLYMER (A) OR OTHER ETHYLENE/$\alpha$-OLEFIN COPOLYMERS | C2 CONTENT | mol% | 92.3 | 86.6 | 85.2 | - | 95.1 | - |
| | C3 CONTENT | mol% | 7.5 | 13.3 | 14.8 | - | 0.0 | - |
| | C6 CONTENT | mol% | 0.2 | 0.1 | 0.0 | - | 4.9 | - |
| | NUMBER OF BRANCHES (Y) BASED ON COMONOMER | PCS/ 1000C | 37 | 63 | 69 | - | 22 | - |
| | CALCULATED VALUE ON RIGHT SIDE OF EQUATION (1) | PCS/ 1000C | 26 | 46 | 55 | - | 31 | - |
| | SUFFICIENCY OF EQUATION (1) | | ○ | ○ | ○ | - | × | - |
| | CALCULATED VALUE ON RIGHT SIDE OF EQUATION (2) | PCS/ 1000C | 30 | 50 | 59 | - | 35 | - |
| | SUFFICIENCY OF EQUATION (2) | | ○ | ○ | ○ | - | × | - |
| | VINYL | PCS/ 1000C | 0.33 | 0.37 | 0.22 | - | 0.19 | - |
| | VINYLIDENE | PCS/ 1000C | 0.28 | 0.41 | 0.30 | - | 0.10 | - |
| | VINYLENE | PCS/ 1000C | 0.18 | 0.12 | 0.05 | - | 0.21 | - |
| | TRI-SUBSTITUTED OLEFIN | PCS/ 1000C | 0.12 | 0.12 | 0.06 | - | 0.21 | - |
| | VINYL+VINYLIDENE | PCS/ 1000C | 0.61 | 0.78 | 0.52 | - | 0.29 | - |
| | TOTAL DOUBLE BONDS | PCS/ 1000C | 0.91 | 1.03 | 0.63 | - | 0.71 | - |
| PROCESSABILITY | STABILITY OF MOLTEN FILM | | ○ | ○ | ○ | ○ | ○ | ○ |

(continued)

| | ITEMS | UNIT | EXAMPLE 5 | EXAMPLE 6 | EXAMPLE 7 | COMPARATIVE EXAMPLE 3 | COMPARATIVE EXAMPLE 4 | COMPARATIVE EXAMPLE 5 |
|---|---|---|---|---|---|---|---|---|
| QUALITY | ADHESIVE STRENGTH | N/15 mm | 2.9 | 3.2 | 2.5 | 1.3 | 1.4 | 1.9 |
| | TEARING STRENGTH | N | 4.6 | 1.7 | 2.8 | 4.9 | 8.5 | 7.1 |
| | TEARABILITY | - | ○ | ○ | ○ | ○ | × | × |

As is clear from the results in Table 2, the laminates according to Examples 5 to 7 of the present invention are laminates that are excellent in the adhesive strength to even the printed nylon substrate. On the other hand, in the laminate according to Comparative Example 3, the resin layer formed on the printed surface of the nylon substrate was a layer made of high-pressure radical polymerization low-density polyethylene, and the adhesive strength was lower than in the examples. Further, in the laminate according to Comparative Example 4, the resin layer formed on the printed surface of the nylon substrate was a layer made of a copolymer of ethylene and 1-hexene, and the adhesive strength was lower than in the examples, and the evaluation of tear strength and tearability was also inferior. Further, in the laminate according to Comparative Example 5, the resin layer formed on the printed surface of the nylon substrate was a layer made of ethylene/methyl acylate copolymer, and the adhesive strength was lower than in the example, and the evaluation of tear strength and tearability was also inferior.

<Second laminate>

1. Method of evaluating resin properties

(1) Melt flow rate (MFR)

As described in the above "<First laminate> 1. Method of evaluating resin properties"

(2) Density

As described in the above "<First laminate> 1. Method of evaluating resin properties"

(3) Amount of comonomer, number of branches and number of double bonds based on comonomer

As described in the above "<First laminate> 1. Method of evaluating resin properties"

(4) Adhesive strength

The obtained laminate was cut out into a strip having a width of 15 mm in the flow direction, and peeled off at the interface between the resin layer (E) and the substrate layer (D'), and the peeling strength in the T peel test at the number of test objects of 5 and a peeling speed of 300 mm/min was taken as the adhesive strength. When the resin layer (E) was cut while pulling and peeling the resin layer (E) from the substrate layer (D'), the value of the highest point on the chart was taken as the adhesive strength. In addition, a coefficient of variation was determined to evaluate the variation in the adhesive strength value.

2. Material

(1) Substrate layer (D')

Harden film N2102 made by Toyobo Co., Ltd. (having a thickness of 15 $\mu$m) was used as a film in which at least the surface in contact with the resin layer (E) contained a polyamide resin as an essential main component.

(2) Ethylene/propylene copolymer (A)

(PE-1) described in the above "<First laminate> 2. Resin material" was used as an ethylene/propylene copolymer (PE2-1). Table 3 shows the physical property values.

(3) High-pressure radical polymerization low-density polyethylene (B)

High-pressure radical polymerization low-density polyethylenes (PE2-2) to (PE2-3) having the physical properties shown in Table 3 were used.

(Example 8)

70% by weight of an ethylene/propylene copolymer (PE2-1) and 30% by weight of a high-pressure radical polymerization low-density polyethylene (PE2-2) were blended. This was sufficiently mixed, and pellets of a polyethylene resin composition (C) was obtained using a 40 mm$\varphi$ single screw extruder.

The pellets obtained above were adjusted to be a take-off speed of 100 m/min and a coating thickness of 15 μm, using an extrusion lamination molding machine, and a biaxially stretched nylon film having a width of 500 mm and a thickness of 15 μm (Harden film N2102 made by Toyobo Co., Ltd.) was used as the substrate layer (D'), and a linear low density polyethylene (LLDPE) film having a thickness of 30 μm (LL-XMTN made by Futamura Chemical Co., Ltd.) was used as a sandwich substrate layer, and extrusion sandwich lamination was performed to produce a laminate. The extrusion lamination molding machine was set such that the temperature of the resin extruded from T dies attached to the extruder with a diameter of 90 mmφ was 320°C, and the extrusion amount was adjusted such that the coating thickness became 15 μm when the take-up speed was 100 m/min at a cooling roll surface temperature of 25°C, a dies width of 560 mm, and a die lip opening of 0.7 mm. Next, using the obtained laminate, the adhesive strength described in the above "<Second laminate> 1. Method of evaluating resin properties" was evaluated. Table 3 shows the evaluation results.

(Comparative Example 6)

A laminate was produced in the same manner as in Example 8 except that a polyethylene resin composition (C) composed only of (PE2-3) which was a high-pressure radical polymerization low-density polyethylene (B) was used without using an ethylene/propylene copolymer (A) in Example 8. Table 3 shows the evaluation results.

(Comparative Example 7)

A laminate was produced in the same manner as in Example 8 except that a polyethylene resin composition (C) composed only of PE2-3 which was a high-pressure radical polymerization low-density polyethylene (B) was used without using an ethylene/propylene copolymer (A) in Example 8, and that a solution in which a two-component anchor coating agent (Takelac A3210/Takenate A3075 made by Mitsui Chemicals) was mixed with ethyl acetate was applied on the substrate layer (D') using a bose roll at the time of using an extrusion lamination molding machine. Table 3 shows the evaluation results.

[Table 3]

|  |  | ITEMS | UNIT | EXAMPLE 8 | COMPARATIVE EXAMPLE 6 | COMPARATIVE EXAMPLE 7 |
|---|---|---|---|---|---|---|
| ETHYLENE/ PROPYLENE COPOLYMER (A) |  | TYPE | - | PE 2-1 | - | - |
|  |  | BLENDING RATIO | % BY WEIGHT | 70 | - | - |
|  |  | MFR | g/10 min | 11 | - | - |
|  |  | DENSITY (X) | g/cm3 | 0.911 | - | - |
|  |  | C2 CONTENT | mol% | 92.3 | - | - |
|  |  | C3 CONTENT | mol% | 7.5 | - | - |
|  |  | C6 CONTENT | mol% | 0.2 | - | - |
|  |  | NUMBER OF BRANCHES (Y) BASED ON COMONOMER | PCS/ 1000C | 37 | - | - |
|  |  | CALCULATED VALUE ON RIGHT SIDE OF EQUATION (1) | PCS/ 1000C | 26 | - | - |
|  |  | SUFFICIENCY OF EQUATION (1) | - | ○ | - | - |
|  |  | CALCULATED VALUE ON RIGHT SIDE OF EQUATION (2) | PCS/ 1000C | 30 | - | - |
|  |  | SUFFICIENCY OF EQUATION (2) | - | ○ | - | - |
|  |  | VINYL | PCS/ 1000C | 0.33 | - | - |

(continued)

| | ITEMS | UNIT | EXAMPLE 8 | COMPARATIVE EXAMPLE 6 | COMPARATIVE EXAMPLE 7 |
|---|---|---|---|---|---|
| | VINYLIDENE | PCS/ 1000C | 0.28 | - | - |
| | VINYL+VINYLIDENE | PCS/ 1000C | 0.61 | - | - |
| LOW-DENSITY POLYETHYLENE (B) | TYPE | - | PE 2-2 | PE 2-3 | PE 2-3 |
| | BLENDING RATIO | % BY WEIGHT | 30 | 100 | 100 |
| | MFR | g/10 min | 5 | 7 | 7 |
| | DENSITY | g/cm3 | 0.918 | 0.918 | 0.918 |
| RESIN COMPOSITION (C) | MFR | g/10 min | 8 | 7 | 7 |
| | DENSITY | g/cm3 | 0.913 | 0.918 | 0.918 |
| APPLICATION OF AC AGENT | | - | NOT APPLIED | NOT APPLIED | APPLIED |
| QUALITY | ADHESIVE STRENGTH | N/15 mm | 5.5 | 3.3 | 5.3 |
| | COEFFICIENT OF VARIATION OF ADHESIVE STRENGTH | % | 2.7 | 3.2 | 44 |

(Evaluation)

As is clear from the results in Table 3, the laminate according to Example 8 of the present invention is a laminate having excellent adhesive strength to a nylon substrate.

On the other hand, when only the high-pressure radical polymerization low-density polyethylene was used (Comparative Example 6), the adhesive strength was reduced. In addition, when the AC agent was applied between the resin layer and the substrate layer, in Comparative Example 7, although the adhesive strength was good, the variation in the adhesive strength was increased because the coefficient of variation was increased.

<Third laminate>

1. Method of evaluating resin properties

(1) Melt flow rate (MFR)

As described in the above "<First laminate> 1. Method of evaluating resin properties"

(2) Density

As described in the above "<First laminate> 1. Method of evaluating resin properties"

(3) Amount of comonomer, number of branches and number of double bonds based on comonomer

As described in the above "<First laminate> 1. Method of evaluating resin properties"

(4) Adhesive strength

As described in the above "<Second laminate> 1. Method of evaluating resin properties."

(5) Tearability

The obtained laminate was sensory-evaluated in terms of cuttability when it was torn by hand from a notch in the flow direction (MD) during processing and direction (TD) perpendicular to the flow direction, respectively. The case where the sample did not elongate at the time of tearing and was cut without resistance was evaluated as "○", and the case where the samples elongated and resistance was generated was evaluated as "×".

2. Material

(1) Substrate layer (D")

(D"-1) and (D"-2) described below were used as a metal foil or a metal vapor-deposited film, respectively.

(D"-1): Aluminum foil made by Toyo Aluminum Co., Ltd. (7 μm thick)
(D"-2): VM-PET 1310 made by Toray Film Processing Co., Ltd. (12 μm thick, aluminum vapor-deposited film)

(2) Ethylene/propylene copolymer (A) or other ethylene/α-olefin copolymers

(PE-1) described in the above "<First laminate> 2. Resin material" was used as an ethylene/propylene copolymer (PE3-1). Further, a commercially available metallocene-type ethylene/α-olefin copolymer was used as (PE3-2). Further, (PE3-4) and (PE3-5) obtained by the following production method were used as an ethylene/propylene copolymer. The physical properties are shown in Tables 4 and 5.

<Production method of (PE3-4) and (PE3-5)>

(i) Preparation of catalyst

To 0.05 mol of complex "rac-dimethyl silylene bis indenyl hafnium dimethyl" prepared by the method described in JP H10-218921 A, an equimolar amount of "N, N-dimethyl anilinium tetrakis (pentafluorophenyl) borate" was added, and diluted to 50 liters with toluene to prepare a catalyst solution.

(ii) Polymerization method

A stirring type, autoclave type continuous reactor with an internal volume of 5.0 liters was used, and the pressure in the reactor was maintained at 80 MPa. While appropriately adjusting ethylene, propylene, and 1-hexene, a raw material gas was continuously supplied at a rate of 55 kg/hour. In addition, the catalyst solution described in the section "(i) Preparation of catalyst" was continuously supplied, and the polymerization temperature was appropriately adjusted within the range of 200 to 250°C to obtain ethylene/propylene copolymers of (PE3-4) and (PE3-5).

(3) High-pressure radical polymerization low-density polyethylene (B)

High-pressure radical polymerization low-density polyethylene (PE3-3) having the physical properties shown in Tables 4 and 5 was used.

(Example 9)

70% by weight of an ethylene/propylene copolymer (PE3-1) and 30% by weight of a high-pressure radical polymerization low-density polyethylene (PE3-3) were blended. This was sufficiently mixed, and pellets of a polyethylene resin composition (C) was obtained using a 40 mmφ single screw extruder.
Using an extrusion lamination molding machine, a biaxially stretched polyester film having a width of 500 mm and a thickness of 12 μm (Espet Film T4102 made by Toyobo Co., Ltd.) was fed as another substrate layer from a feeder, the above obtained pellets were adjusted such that a take-off speed was 100 m/min, and a coating thickness was 15 μm, (D"-1) was fed out as a substrate layer (D") from the sandwich side, and extrusion sandwich lamination was performed. At this time, an anchor coat treatment was performed on the polyester film surface on the resin layer (E) side. Next, the opposite side to the resin layer (E) side of the substrate layer (D") was subjected to anchor coating treatment, and subjected to extrusion lamination with LDPE (Novektec LC600A made by Japan Polyethylene Corporation) at a take-off speed of 100m/min and a coating thickness of 20 μm to obtain a laminate of the polyester film of 12 μm, the resin layer (E), the substrate layer (D"), and the LC600A layer. As the anchor coating agent, a mixture of Olivine EL420 made by Toyo Morton Co., Ltd. and methanol at a ratio of 1:9 was used. The extrusion lamination molding machine was set such that the temperature of the resin extruded from T dies attached to the extruder with a diameter of 90 mmφ was 320°C, and the extrusion amount was adjusted such that the coating thickness became the specified value when the take-off speed was 100 m/min at a cooling roll surface temperature of 20°C, a dies width of 560 mm, and a die lip opening of 0.7 mm. Next, using the obtained laminate, the adhesive strength and tearability described in the above "<Third laminate> 1. Method of evaluating resin properties" was evaluated. Table 4 shows the evaluation results.

(Example 10)

A laminate was produced in the same manner as in Example 9 except that (D"-2) was used as a substrate layer (D") in Example 9. Table 5 shows the evaluation results.

(Example 11)

A laminate was produced in the same manner as in Example 9 except that (PE3-4) which was an ethylene/propylene copolymer was used instead of (PE3-1) which was an ethylene/propylene copolymer (C) in Example 9. Table 4 shows the evaluation results.

(Example 12)

A laminate was produced in the same manner as in Example 9 except that (PE3-5) which was an ethylene/propylene copolymer was used instead of (PE3-1) which was an ethylene/propylene copolymer (C) in Example 9. Table 4 shows the evaluation results.

(Comparative Example 8)

A laminate was produced in the same manner as in Example 9 except that (PE3-2) which was an ethylene/$\alpha$-olefin copolymer was used instead of (PE3-1) which was an ethylene/propylene copolymer (A) in Example 9. Table 4 shows the evaluation results.

(Comparative Example 9)

A laminate was produced in the same manner as in Example 9 except that a polyethylene resin composition (C) composed only of (PE3-3) which was a high-pressure radical polymerization low-density polyethylene (B) was used without using an ethylene/propylene copolymer (A) in Example 9. Table 4 shows the evaluation results.

(Comparative Example 10)

A laminate was produced in the same manner as in Example 10 except that (PE3-2) which was an ethylene/$\alpha$-olefin copolymer was used instead of (PE3-1) which was an ethylene/propylene copolymer (A) in Example 10. Table 5 shows the evaluation results.

(Comparative Example 11)

A laminate was produced in the same manner as in Example 10 except that a polyethylene resin composition (C) composed only of (PE3-3) which was a high-pressure radical polymerization low-density polyethylene (B) was used without using an ethylene/propylene copolymer (A) in Example 10. Table 5 shows the evaluation results.

[Table 4]

| | | ITEMS | UNIT | EXAMPLE 9 | EXAMPLE 11 | EXAMPLE 12 | COMPARATIVE EXAMPLE 8 | COMPARATIVE EXAMPLE 9 |
|---|---|---|---|---|---|---|---|---|
| RESIN LAYER (E) | ETHYLENE/PROPYLENE COPOLYMER (A) OR ETHYLENE/$\alpha$-OLEFIN COPOLYMER | TYPE | | PE 3-1 | PE 3-4 | PE 3-5 | PE 3-2 | - |
| | | BLENDING RATIO | % BY WEIGHT | 70 | 70 | 70 | 70 | - |
| | | MFR | g/10 min | 11 | 18 | 14 | 12 | - |
| | | DENSITY (X) | g/cm3 | 0.911 | 0.906 | 0.904 | 0.911 | - |
| | | C2 CONTENT | mol% | 92.3 | 90.6 | 90.0 | 95.2 | - |
| | | C3 CONTENT | mol% | 7.5 | 9.2 | 9.9 | 0.0 | - |
| | | C6 CONTENT | mol% | 0.2 | 0.2 | 0.1 | 4.8 | - |
| | | NUMBER OF BRANCHES (Y) BASED ON COMONOMER (Y) | PCS/ 1000C | 37 | 45 | 47 | 22 | - |
| | | CALCULATED VALUE ON RIGHT SIDE OF EQUATION (1) | PCS/ 1000C | 26 | 32 | 34 | 26 | - |
| | | SUFFICIENCY OF EQUATION (1) | - | ○ | ○ | ○ | × | - |
| | | CALCULATED VALUE ON RIGHT SIDE OF EQUATION (2) | PCS/ 1000C | 30 | 36 | 38 | 30 | - |
| | | SUFFICIENCY OF EQUATION (2) | - | ○ | ○ | ○ | × | - |
| | | VINYL | PCS/ 1000C | 0.33 | 0.34 | 0.31 | 0.06 | - |
| | | VINYLIDENE | PCS/ 1000C | 0.28 | 0.32 | 0.30 | 0.02 | - |
| | | VINYL+VINYLIDENE | PCS/ 1000C | 0.61 | 0.66 | 0.61 | 0.08 | - |

(continued)

| | ITEMS | UNIT | EXAMPLE 9 | EXAMPLE 11 | EXAMPLE 12 | COMPARATIVE EXAMPLE 8 | COMPARATIVE EXAMPLE 9 |
|---|---|---|---|---|---|---|---|
| LOW-DENSITY POLYETHYLENE (B) | TYPE | | PE 3-3 | PE 3-3 | PE 3-3 | PE 3-3 | PE 3-3 |
| | BLENDING RATIO | % BY WEIGHT | 30 | 30 | 30 | 30 | 100 |
| | MFR | g/10 min | 7 | 7 | 7 | 7 | 7 |
| | DENSITY | g/cm3 | 0.918 | 0.918 | 0.918 | 0.918 | 0.918 |
| RESIN COMPOSITION (C) | MFR | g/10 min | 10 | 14 | 11 | 10 | 7 |
| | DENSITY | g/cm3 | 0.913 | 0.91 | 0.908 | 0.913 | 0.918 |
| SUBSTRATE LAYER (D") | TYPE | - | D" -1 | D" -1 | D" -1 | D" -1 | D" -1 |
| QUALITY | ADHESIVE STRENGTH | N/15 mm | 2.3 | 2.1 | 2.0 | 1.5 | 1.2 |
| | TEARABILITY | | ○ | ○ | ○ | × | ○ |

[Table 5]

| | | ITEMS | UNIT | EXAMPLE 10 | COMPARATIVE EXAMPLE 10 | COMPARATIVE EXAMPLE 11 |
|---|---|---|---|---|---|---|
| RESIN LAYER (E) | ETHYLENE/PROPYLENE COPOLYMER (A) OR ETHYLENE/α-OLEFIN COPOLYMER | TYPE | - | PE 3-1 | PE 3-2 | - |
| | | BLENDING RATIO | % BY WEIGHT | 70 | 70 | - |
| | | MFR | g/10 min | 11 | 12 | - |
| | | DENSITY (X) | g/cm3 | 0.911 | 0.911 | - |
| | | C2 CONTENT | mol% | 92.3 | 95.2 | - |
| | | C3 CONTENT | mol% | 7.5 | 0.0 | - |
| | | C6 CONTENT | mol% | 0.2 | 4.8 | - |
| | | NUMBER OF BRANCHES (Y) BASED ON COMONOMER | PCS/1000C | 37 | 22 | - |
| | | CALCULATED VALUE ON RIGHT SIDE OF EQUATION (1) | PCS/1000C | 26 | 26 | - |
| | | SUFFICIENCY OF EQUATION (1) | - | ○ | × | - |
| | | CALCULATED VALUE ON RIGHT SIDE OF EQUATION (2) | PCS/1000C | 30 | 30 | - |
| | | SUFFICIENCY OF EQUATION (2) | - | ○ | × | - |
| | | VINYL | PCS/1000C | 0.33 | 0.06 | - |
| | | VINYLIDENE | PCS/1000C | 0.28 | 0.02 | - |
| | | VINYL+VINYLIDENE | PCS/1000C | 0.61 | 0.08 | - |
| | LOW-DENSITY POLYETHYLENE (B) | TYPE | - | PE 3-3 | PE 3-3 | PE 3-3 |
| | | BLENDING RATIO | % BY WEIGHT | 30 | 30 | 100 |
| | | MFR | g/10 min | 7 | 7 | 7 |
| | | DENSITY | g/cm3 | 0.918 | 0.918 | 0.918 |

(continued)

| | ITEMS | UNIT | EXAMPLE 10 | COMPARATIVE EXAMPLE 10 | COMPARATIVE EXAMPLE 11 |
|---|---|---|---|---|---|
| RESIN COMPOSITION (C) | MFR | g/10 min | 10 | 10 | 7 |
| | DENSITY | g/cm3 | 0.913 | 0.913 | 0.918 |
| SUBSTRATE LAYER (D") | TYPE | - | D"-2 | D"-2 | D"-2 |
| QUALITY | ADHESIVE STRENGTH | N/15 mm | 1.6 | 1.3 | 0.9 |
| | TEARABILITY | - | ○ | × | ○ |

(Evaluation)

As is clear from the results of Tables 4 and 5, the laminates of Examples 9 to 12 of the present invention are laminates that are excellent in easy tearing properties and adhesive strength to a metal foil or a metal vapor-deposited film.

On the other hand, when the ethylene/α-olefin copolymer was used (Comparative Examples 8 and 10), the adhesive strength was low, and the tearability was bad. When only the high-pressure radical polymerization low-density polyethylene was used (Comparative Examples 9 and 11), the tearability was good, but the adhesive strength was reduced.

Industrial Applicability

The laminate of the present invention can be used as an easily tearable packaging bag film, a food packaging film, a liquid paper container, a paper bundle, a paper cup, a paper tray, and the like. In particular, the second laminate of the present invention can be used as a clean packaging film, packaging body, or the like for food, medical care, electronic materials, and the like. Further, the third laminate of the present invention can be used as an easily tearable packaging bag film, a food packaging film, a liquid paper container, a packaging container for yokan, frozen desserts such as jelly, dried foods, oils and fats, confectionery, and the like.

**Claims**

1. A polyethylene resin composition (C) for lamination, which contains an ethylene/propylene copolymer (A) having the following properties (a-1) to (a-4):

   (a-1) a constituent unit derived from ethylene is contained 80 to 98 mol% as a main component, a constituent unit derived from propylene is contained 2 to 20 mol% as an essential sub-component, and a constituent unit derived from a third α-olefin other than ethylene and propylene may be contained 5 mol% or less as a sub-component (provided, however, that when the constituent unit derived from the third α-olefin is contained, total of the constituent unit derived from ethylene, the constituent unit derived from propylene, and the constituent unit derived from the third α-olefin does not exceed 100 mol%);
   (a-2) melt flow rate (190°C, load of 21.18 N) is 0.1 to 100 g/10 min;
   (a-3) density is 0.88 to 0.94 g/cm$^3$; and
   (a-4) total of vinyl and vinylidene is 0.35 or more (provided, however, that number of vinyl and vinylidene is a number per 1000 carbon atoms in total of main chain and side chain measured by NMR).

2. The polyethylene resin composition for lamination according to claim 1, wherein the polyethylene resin composition (C) for lamination contains a high-pressure radical polymerization low-density polyethylene (B) having the following properties (b-1) to (b-2):

   (b-1) melt flow rate (190°C, load of 21.18 N) is 0.1 to 20 g/10 min, and
   (b-2) density is 0.915 to 0.930 g/cm$^3$.

3. The polyethylene resin composition for lamination according to claim 2, wherein the polyethylene resin composition (C) for lamination contains 95 to 10% by weight of the ethylene/propylene copolymer (A) and 5 to 90% by weight of the high-pressure radical polymerization low-density polyethylene (B).

4. The polyethylene resin composition for lamination according to any one of claims 1 to 3, wherein the ethylene/propylene copolymer (A) further satisfies the following property (a-5):
   (a-5) number of branches (Y) based on comonomer in the ethylene/propylene copolymer and density (X) satisfy Equation 1 (provided, however, that the number of branches is a number per 1000 carbon atoms in total of main chain and side chain measured by NMR.).

$$(Y) \geq -1157 \times (X) + 1080 \quad (Equation\ 1)$$

5. The polyethylene resin composition for lamination according to any one of claims 1 to 4, wherein the ethylene/propylene copolymer (A) further satisfies the following property (a-6):

(a-6) number of branches (Y) based on comonomer in the ethylene/propylene copolymer and density (X) satisfy Equation 2 (provided, however, that the number of branches is a number per 1000 carbon atoms in total of main chain and side chain measured by NMR.).

$$(Y) \geq -1157 \times (X) + 1084 \quad \text{(Equation 2)}$$

6. The polyethylene resin composition for lamination according to any one of claims 1 to 5, wherein the polyethylene resin composition (C) for lamination further satisfies the following properties (C-1) to (C-2):

(C-1) melt flow rate (190°C, load of 21.18 N) is 1 to 100 g/10 min; and
(C-2) density is 0.88 to 0.94 g/cm$^3$.

7. A laminate having a layer containing the polyethylene resin composition (C) for lamination according to any one of claims 1 to 6.

8. A laminate having at least a substrate layer (D) and a layer (E) containing the polyethylene resin composition (C) for lamination according to any one of claims 1 to 6.

9. A laminate having at least two layers of a resin layer (E) and a substrate layer (D'),
wherein the resin layer (E) is formed by directly bonding on the substrate layer (D'), and the resin layer (E) and the substrate layer (D') each satisfy the following properties:

resin layer (E): containing the polyethylene resin composition (C) for lamination according to any one of claims 1 to 6; and
substrate layer (D'): a film in which at least a surface in contact with the resin layer (E) contains a polyamide resin as an essential main component.

10. A laminate having at least two layers of a resin layer (E) and a substrate layer (D"),
wherein the resin layer (E) is formed by directly bonding on the substrate layer (D"), and the resin layer (E) and the substrate layer (D") each satisfy the following properties:

resin layer (E): containing the polyethylene resin composition (C) for lamination according to any one of claims 1 to 6; and
substrate layer (D"): metal foil or metal vapor-deposited film.

11. The laminate according to any one of claims 7 to 10, wherein the laminate is formed by an extrusion coating method.

12. A method of producing a laminate, comprising forming a laminate using the polyethylene resin composition (C) for lamination according to any one of claims 1 to 6.

13. The method of producing a laminate according to claim 12, wherein the laminate is formed by an extrusion coating method.

[Fig. 1]

ADHESIVE STRENGTH/PIERCING STRENGTH

## INTERNATIONAL SEARCH REPORT

| International application No. |
|---|
| PCT/JP2018/045740 |

A. CLASSIFICATION OF SUBJECT MATTER
Int.Cl. C08L23/16(2006.01)i, B32B27/32(2006.01)i, C08F210/16(2006.01)i,
C08L23/06(2006.01)i

According to International Patent Classification (IPC) or to both national classification and IPC

B. FIELDS SEARCHED

Minimum documentation searched (classification system followed by classification symbols)
Int.Cl. C08L23/16, B32B27/32, C08F210/16, C08L23/06

Documentation searched other than minimum documentation to the extent that such documents are included in the fields searched
Published examined utility model applications of Japan 1922–1996
Published unexamined utility model applications of Japan 1971–2019
Registered utility model specifications of Japan 1996–2019
Published registered utility model applications of Japan 1994–2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2017-183479 A (JAPAN POLYETHYLENE CORP.) 05 October 2017, claims, paragraphs [0054], [0058], [0060], [0063]-[0081] (Family: none) | 1-13 |
| X | JP 2015-127402 A (JAPAN POLYETHYLENE CORP.) 09 July 2015, claims, paragraphs [0054], [0059], [0062], [0065]-[0084] & JP 2016-56337 A | 1-13 |

☒ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 March 2019 (07.03.2019) | 19 March 2019 (19.03.2019) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

### INTERNATIONAL SEARCH REPORT

| | International application No. |
|---|---|
| | PCT/JP2018/045740 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2013-234289 A (MITSUI CHEMICALS, INC.) 21 November 2013, entire text (Family: none) | 1-13 |
| A | JP 2013-241509 A (MITSUI CHEMICALS, INC.) 05 December 2013, entire text & WO 2013/172264 A1, full text & TW 201400509 A & CN 104271685 A & KR 10-2015-0005993 A | 1-13 |
| A | JP 2008-540699 A (DOW GLOBAL TECHNOLOGIES INC.) 20 November 2008, entire text & US 2006/0198983 A1, full text & WO 2006/099631 A1 & EP 2221329 A1 & CN 1976965 A & KR 10-2007-0119643 A & CN 101277987 A & ZA 200707864 A & AU 2005224259 A | 1-13 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H1024539 A
- JP 2000212339 A
- JP 2006082547 A
- JP S57157724 A
- JP S5975915 A
- JP 2000037831 A
- JP 2016022613 A
- JP 2002019060 A
- JP 2001191452 A
- JP H10218921 A

### Non-patent literature cited in the description

- **E. W. HANSEN ; R. BLOM ; O. M. BADE.** *Polymer,* 1997, vol. 36, 4295
- Polyethylene Technology Reader. 2001